(19) Europäisches Patentamt
European Patent Office
Office européen des brevets

(11) **EP 2 392 142 B1**

(12) **FASCICULE DE BREVET EUROPEEN**

(45) Date de publication et mention
de la délivrance du brevet:
**24.10.2018 Bulletin 2018/43**

(51) Int Cl.:
***H04N 19/105*** *(2014.01)*   ***H04N 19/176*** *(2014.01)*
***H04N 19/513*** *(2014.01)*   ***H04N 19/61*** *(2014.01)*
***H04N 19/17*** *(2014.01)*   ***H04N 19/194*** *(2014.01)*
***H04N 19/53*** *(2014.01)*   ***H04N 19/523*** *(2014.01)*
***H04N 19/54*** *(2014.01)*

(21) Numéro de dépôt: **10707588.9**

(22) Date de dépôt: **26.01.2010**

(86) Numéro de dépôt international:
**PCT/FR2010/050115**

(87) Numéro de publication internationale:
**WO 2010/086545 (05.08.2010 Gazette 2010/31)**

(54) **PROCEDES DE CODAGE ET DE DECODAGE D'UNE SEQUENCE D'IMAGE METTANT EN OEUVRE UNE COMPENSATION EN MOUVEMENT, DISPOSITIFS DE CODAGE ET DE DECODAGE, SIGNAL ET PROGRAMMES D'ORDINATEUR CORRESPONDANTS**

VERFAHREN ZUM CODIEREN UND DECODIEREN EINER BILDSEQUENZ, DIE EINE BEWEGUNGSKOMPENSATION IMPLEMENTIERT, UND ENTSPRECHENDE CODIERUNGS- UND DECODIERUNGSEINRICHTUNGEN, SIGNAL UND COMPUTERPROGRAMME

METHOD FOR ENCODING AND DECODING AN IMAGE SEQUENCE IMPLEMENTING A MOVEMENT COMPENSATION, AND CORRESPONDING ENCODING AND DECODING DEVICES, SIGNAL, AND COMPUTER PROGRAMS

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **28.01.2009 FR 0950510**

(43) Date de publication de la demande:
**07.12.2011 Bulletin 2011/49**

(73) Titulaire: **Orange**
**75015 Paris (FR)**

(72) Inventeurs:
• **CAMMAS, Nathalie**
**F-35490 Sens De Bretagne (FR)**
• **PATEUX, Stéphane**
**F-35700 Rennes (FR)**

(74) Mandataire: **Vidon Brevets & Stratégie**
**16B, rue de Jouanet**
**BP 90333**
**35703 Rennes Cedex 7 (FR)**

(56) Documents cités:
**EP-A- 1 261 212     FR-A- 2 917 872**

• **DA LIU ET AL: "Direct Mode Coding for B Pictures using Virtual Reference Picture" IEEE INTERNATIONAL CONFERENCE ON MULTIMEDIA AND EXPO, 1 juillet 2007 (2007-07-01), pages 1363-1366, XP031123887 ISBN: 978-1-4244-1016-3**
• **SOO-CHUL HAN ET AL: "Spatiotemporal subband/wavelet coding of video with object-based motion information" INTERNATIONAL CONFERENCE ON IMAGE PROCESSING, 26 octobre 1997 (1997-10-26), - 29 octobre 1997 (1997-10-29) pages 629-632, XP010254013 ISBN: 978-0-8186-8183-7**
• **DE FORNI R ET AL: "On the Benefits of Leaf Merging in Quad-Tree Motion Models" IEEE INTERNATIONAL CONFERENCE ON IMAGE PROCESSING, vol. 2, 11 septembre 2005 (2005-09-11), - 14 septembre 2005 (2005-09-14) pages 858-861, XP010851189 ISBN: 978-0-7803-9134-5**
• **PRAKASH ISHWAR ET AL: "On Spatial Adaptation of Motion-Field Smoothness in Video Coding" IEEE TRANSACTIONS ON CIRCUITS AND SYSTEMS FOR VIDEO TECHNOLOGY, vol. 10, no. 6, 1 septembre 2000 (2000-09-01), XP011014098 ISSN: 1051-8215**

- SHARAF A ET AL: "Motion compensation using spatial transformations with forward mapping" SIGNAL PROCESSING. IMAGE COMMUNICATION, ELSEVIER SCIENCE PUBLISHERS, AMSTERDAM, NL, vol. 14, no. 3, 4 janvier 1999 (1999-01-04), pages 209-227, XP004144075 ISSN: 0923-5965

- ALTUNBASAK Y ET AL: "Two-dimensional object-based coding using a content-based mesh and affine motion parameterization" IEEE INTERNATIONAL CONFERENCE ON IMAGE PROCESSING, vol. 2, 23 octobre 1995 (1995-10-23), - 26 octobre 1995 (1995-10-26) pages 394-397, XP010197108 ISBN: 978-0-7803-3122-8

**Description**

**1. Domaine de l'invention**

Le domaine de l'invention est celui du codage et du décodage de séquences d'images. L'invention concerne notamment le traitement de séquences d'images vidéo ou de scènes, pouvant être représentées à l'aide de tubes de mouvement, mettant en oeuvre une prédiction par compensation en mouvement en avant.

L'invention peut notamment s'appliquer au codage vidéo mis en oeuvre dans les codeurs vidéo actuels (MPEG, H.264, etc) ou à venir (H.265 ou ISO/MPEG).

**2. Art antérieur**

Dans les schémas de codage vidéo hybride actuels, les images sont codées en deux phases, une première phase de prédiction par compensation en mouvement, suivie d'une deuxième phase de codage de résidus de prédiction.

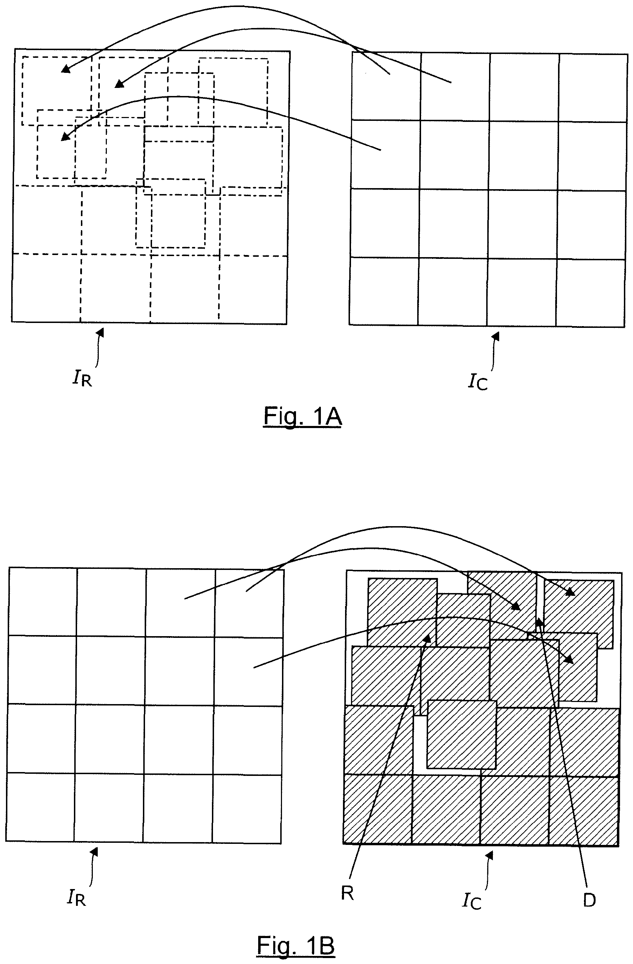

Parmi les techniques de compensation en mouvement, on connaît la compensation de mouvement dite en « arrière » dont un exemple est illustré en figure 1A. La compensation en mouvement en arrière permet de prédire une image $Ic$, à partir d'au moins une image de référence $Ir$, en tenant compte de vecteurs de déplacement pointant de l'image courante vers une ou plusieurs images de référence.

Cette prédiction par compensation de mouvement en arrière comprend deux étapes principales :

- l'image à prédire $Ic$ est découpée en un ensemble de blocs ;
- pour chaque bloc de cette image à prédire $Ic$, une prédiction est établie à l'aide d'un vecteur de déplacement par rapport à l'image de référence $Ir$.

Ainsi, pour tout point ou pixel d'un bloc considéré de l'image à prédire $Ic$, on lui affecte la valeur du point de l'image de référence correspondant, déplacée de la valeur du vecteur de déplacement associé au bloc considéré. Cette technique permet de fournir une valeur de prédiction pour chaque point de l'image à prédire.

Parmi les techniques de compensation en mouvement, on connaît également la compensation de mouvement dite en « avant » dont un exemple est illustré en figure 1B. La compensation en mouvement en avant permet de prédire une image $Ic$, à partir d'au moins une image de référence $Ir$, en tenant compte de vecteurs de déplacement pointant d'une ou plusieurs images de référence $Ir$ vers l'image courante $Ic$.

Cette prédiction par compensation de mouvement en avant comprend deux étapes principales :

- l'image de référence $Ir$ est découpée en un ensemble de blocs de référence ;
- pour chaque bloc de référence de l'image de référence, un vecteur de déplacement est établi, et pour chaque point de ce bloc de référence, on affecte au point de l'image à prédire $Ic$ la valeur du point de l'image de référence, déplacée du vecteur de déplacement.

Un inconvénient de cette technique de compensation de mouvement en avant est qu'elle engendre l'apparition de zones de recouvrement lorsque plusieurs blocs se chevauchent, notées $R$ sur la figure 1B. De plus, l'utilisation de déplacements différents sur les blocs projetés en avant engendre également des zones de découvrement entre les blocs, notées $D$ sur la figure 1B.

L'absence d'affectation de valeurs dans les zones découvertes limite les performances du schéma de codage proposé.

Une solution a été proposée dans la demande de brevet français FR 2 917 872 au nom du même Demandeur.

Cette technique repose sur l'utilisation de tubes de mouvement pour représenter une séquence d'images. Ces tubes de mouvement se déplacent dans l'espace au cours du temps, en suivant les trajectoires de mouvement de la séquence. Cette « persistance temporelle » des tubes permet de représenter de façon continue la séquence vidéo et de représenter efficacement à la fois les zones de continuité et de discontinuité du mouvement d'une séquence.

Pour un tube de mouvement donné, initialisé dans une image de référence, la prédiction d'une image à prédire appartenant à ce même tube est obtenue par projection avant de chaque bloc de l'image de référence à l'aide d'un ou plusieurs vecteurs mouvement.

Un inconvénient de cette technique est que la prédiction par compensation en mouvement en avant d'une image à prédire d'un tube de mouvement n'utilise que la seule image de référence dans laquelle est initialisé le tube de mouvement. Or cette image de référence peut être très éloignée de l'image à prédire. Par conséquent, l'efficacité de prédiction est d'autant plus limitée que l'image de référence est éloignée de l'image à prédire.

Il est donc nécessaire d'apporter de nouvelles techniques de codage/décodage d'images mettant en oeuvre une prédiction par compensation en mouvement en avant, permettant d'améliorer ces techniques de l'art antérieur.

## 3. Exposé de l'invention

L'invention est définie dans les revendications. L'expression "mode de réalisation" doit être comprise comme désignant un exemple permettant d'illustrer l'invention, à moins qu'elle ne se réfère précisément à l'invention telle que définie dans les revendications.

L'invention propose une solution nouvelle qui ne présente pas l'ensemble de ces inconvénients de l'art antérieur, sous la forme d'un procédé de codage d'une séquence d'images, comprenant une étape de découpage d'une image de référence en blocs et une étape de prédiction associant au moins un bloc d'une image courante de la séquence à au moins un bloc correspondant dans au moins une image à compenser en mouvement de la séquence, la ou les images à compenser ayant été précédemment codées.

Selon l'invention, l'étape de prédiction comprend les étapes suivantes, pour au moins un bloc donné de l'image de référence :

- détermination d'une pluralité de vecteurs de contrôle associés à l'image courante pour le bloc donné, représentatifs chacun d'un déplacement entre un point caractéristique du bloc donné et une position correspondante du point caractéristique dans l'image courante, et découpage en sous-blocs du bloc donné tenant compte d'un mouvement entre l'image de référence et l'image courante, définissant une première partition,
- détermination d'une pluralité de vecteurs de contrôle associés à l'image à compenser pour le bloc donné, représentatifs chacun d'un déplacement entre un point caractéristique du bloc donné et une position correspondante du point caractéristique dans l'image à compenser, et découpage en sous-blocs du bloc donné tenant compte d'un mouvement entre l'image de référence et l'image à compenser, définissant une deuxième partition,
- obtention d'un partitionnement commun en sous-blocs pour le bloc donné, dits sous-blocs de base, par comparaison des première et deuxième partitions ;
- détermination d'un premier jeu de vecteurs de contrôle pour les sous-blocs de base, à partir des vecteurs de contrôle associés à l'image courante ;
- détermination d'un second jeu de vecteurs de contrôle pour les sous-blocs de base, à partir des vecteurs de contrôle associés à l'image à compenser ;
- compensation en mouvement d'au moins un sous-bloc de l'image à compenser correspondant à au moins un sous-bloc de base déplacé en mouvement à l'aide du second jeu de vecteurs de contrôle, vers au moins un sous-bloc de l'image courante
- correspondant à au moins un sous-bloc de base déplacé en mouvement à l'aide du premier jeu de vecteurs de contrôle.

L'invention propose ainsi d'améliorer les techniques de prédiction par compensation en mouvement en avant existantes, notamment lorsque l'image à prédire (image courante) est éloignée (temporellement ou par son contenu) de l'image de référence classiquement utilisée pour la compensation en mouvement.

Pour ce faire, on utilise une ou plusieurs images à compenser en mouvement « intermédiaires » pour prédire l'image courante. Ces images à compenser présentent l'avantage d'être plus proches (temporellement ou par leur contenu) de l'image courante.

On considère que le modèle de mouvement est défini par un ensemble de vecteurs de contrôle, tels que décrits dans la demande de brevet français n°0854465 déposée le 1er juillet 2008 au nom du même Demandeur, qui propose une nouvelle technique de prédiction par compensation en mouvement visant à obtenir une représentation d'un mouvement naturel tout en limitant la complexité apportée, que cela soit au niveau des calculs ou bien encore au niveau du nombre de paramètres à transmettre.

On estime ensuite, grâce aux vecteurs de contrôle, le mouvement dans chaque image à compenser par rapport à l'image de référence, et le mouvement dans l'image courante par rapport à cette même image de référence.

Il est alors possible de prédire l'image courante (ou une région de cette image) par compensation en mouvement en avant, à partir de la ou des images à compenser en mouvement.

Selon un mode de réalisation particulier de l'invention, le bloc donné dans l'image de référence et les blocs correspondants dans les images à compenser et courante appartiennent à un même tube de mouvement, initialisé dans ladite image de référence.

De tels tubes de mouvement sont notamment décrits dans la demande de brevet français FR 2 917 872 précitée.

En d'autres termes, l'invention propose de prédire un bloc d'une image courante appartenant à un tube de mouvement, en utilisant une technique de compensation en mouvement en avant appliquée à au moins un bloc correspondant d'une ou plusieurs images à compenser appartenant au même tube. Cette image à compenser en mouvement est distincte de l'image de référence du tube, dans laquelle est initialisé le tube (correspondant à l'instant de création du tube).

De cette façon, un seul tube de mouvement est utilisé pour prédire le bloc de l'image courante. Il suffit donc de coder les mouvements d'un seul tube de mouvement pour prédire un bloc de l'image courante, ou une seule famille de tubes de mouvement, tous initialisés dans l'image de référence, pour prédire l'image courante. Par ailleurs, ce tube peut également bénéficier d'une valeur de texture codée sur l'image à compenser (et non sur l'image de référence). Cette valeur de texture dans l'image à compenser peut être codée à partir d'informations autres que celles du tube considéré.

Une solution alternative est de créer un ensemble de tubes de mouvement initialisés sur plusieurs images de référence distinctes et d'estimer le mouvement de chacun des tubes vers l'image courante à prédire. Cependant, cette technique est coûteuse au niveau de la quantité d'information à transmettre, car elle nécessite de coder les mouvements de plusieurs familles de tubes de mouvement.

La compensation en mouvement en avant utilisant une image différente de l'image de référence des tubes de mouvement pour construire la prédiction d'une image courante à coder n'est donc pas évidente.

Selon une caractéristique particulière de l'invention, au moins une des étapes de découpage met en oeuvre deux passes successives de découpage en sous-blocs de taille adaptative.

Par exemple, la première passe est une passe « explicite », tenant compte du mouvement propre au bloc donné, et la deuxième passe est une passe « implicite », mise en oeuvre sur les sous-blocs obtenus lors de la première passe de découpage, tenant compte du mouvement propre au bloc donné et du mouvement des blocs voisins du bloc donné.

Selon un autre aspect de l'invention, au moins une des étapes de découpage met en oeuvre au moins deux itérations, jusqu'à atteindre un critère d'arrêt prédéterminé propre à ladite étape de découpage délivrant ladite première et/ou deuxième partition, ledit critère d'arrêt appartenant au groupe comprenant :

- une taille minimale d'un sous-bloc ;
- un nombre de découpages maximal ;
- une différence entre les vecteurs de contrôle associés à deux sous-blocs inférieure à un seuil prédéterminé.

Ainsi, la première partition, obtenue en tenant compte du mouvement entre l'image de référence et l'image courante, et la deuxième partition, obtenue en tenant compte du mouvement entre l'image de référence et l'image à compenser peuvent être différentes, puisque le critère de découpage en sous-blocs (i.e critère d'arrêt) est dépendant de l'image considérée (image courante ou à compenser) et que les données d'entrée (i.e. les vecteurs de contrôle) peuvent être distincts entre les deux étapes de découpage.

Par exemple, les vecteurs de contrôle pour le bloc donné ou sous-bloc de base sont associés chacun à un sommet du bloc donné ou sous-bloc de base.

Ainsi, pour une image en deux dimensions, quatre vecteurs de contrôle sont associés au bloc, un vecteur de contrôle étant associé à chaque sommet ou coin du bloc. Pour une image en trois dimensions, huit vecteurs sont associés au bloc, qui correspond en fait à un cube, un vecteur de contrôle étant associé à chaque coin du bloc. Il est également possible d'associer ces vecteurs de contrôle à d'autres points du bloc, correspondant par exemple à un contour. De la même façon, le nombre de vecteurs de contrôle associé à un bloc n'est pas figé.

Selon une autre caractéristique particulière, le procédé de codage comprend une étape d'insertion, dans un signal représentatif de la séquence d'images, d'au moins une information d'identification signalant l'image de référence et la ou les images à compenser en mouvement utilisées pour le codage de l'image courante, et au moins une information de reconstruction des vecteurs de contrôle pour le bloc donné.

L'invention concerne également un programme d'ordinateur comportant des instructions pour la mise en oeuvre du procédé de codage décrit précédemment lorsque ledit programme est exécuté par un processeur.

Ainsi, le procédé de codage selon l'invention peut être mis en oeuvre de diverses manières, notamment sous forme câblée ou sous forme logicielle.

Dans un autre mode de réalisation, l'invention concerne un dispositif de codage d'une séquence d'images, comprenant des moyens de découpage d'une image de référence en blocs et des moyens de prédiction associant au moins un bloc d'une image courante de la séquence à au moins un bloc correspondant dans au moins une image à compenser en mouvement de la séquence, la ou les images à compenser ayant été précédemment codées.

Selon l'invention, les moyens de prédiction comprennent les moyens suivants, activés pour au moins un bloc donné de l'image de référence :

- des moyens de détermination d'une pluralité de vecteurs de contrôle associés à l'image courante pour le bloc donné, et des moyens de découpage en sous-blocs du bloc donné tenant compte d'un mouvement entre l'image de référence et l'image courante, définissant une première partition,
- des moyens de détermination d'une pluralité de vecteurs de contrôle associés à l'image à compenser pour le bloc donné, et des moyens de découpage en sous-blocs du bloc donné tenant compte d'un mouvement entre l'image de référence et l'image à compenser, définissant une deuxième partition,

- des moyens d'obtention d'un partitionnement commun en sous-blocs pour le bloc donné, dits sous-blocs de base, par comparaison des première et deuxième partitions ;

- des moyens de détermination d'un premier jeu de vecteurs de contrôle pour les sous-blocs de base, à partir des vecteurs de contrôle associés à l'image courante, et d'un second jeu de vecteurs de contrôle pour les sous-blocs de base, à partir des vecteurs de contrôle associés à l'image à compenser ;

- des moyens de compensation en mouvement d'au moins un sous-bloc de l'image à compenser correspondant à au moins un sous-bloc de base déplacé en mouvement à l'aide du second jeu de vecteurs de contrôle, vers au moins un sous-bloc de l'image courante correspondant à au moins un sous-bloc de base déplacé en mouvement à l'aide du premier jeu de vecteurs de contrôle.

Un tel dispositif de codage est notamment adapté à mettre en oeuvre le procédé de codage décrit précédemment. Il s'agit par exemple d'un codeur vidéo de type MPEG ou H.264, ou selon une future norme de compression vidéo, par exemple H.265.

L'invention concerne également un signal représentatif d'une séquence d'images codée selon le procédé de codage décrit ci-dessus. Un tel signal comprend au moins une information d'identification signalant une image de référence et au moins une image à compenser en mouvement utilisées pour coder une image courante, et au moins une information de reconstruction de vecteurs de contrôle pour un bloc donné de l'image de référence.

Ce signal pourra bien sûr comporter les différentes caractéristiques relatives au procédé de codage selon l'invention.

L'invention concerne encore un procédé de décodage d'un signal représentatif d'une séquence d'images tel que décrit ci-dessus.

Un tel procédé comprend les étapes suivantes, pour au moins une image courante :

- détermination d'une image de référence et d'au moins une image à compenser utilisées pour coder l'image courante, à partir d'au moins une information d'identification présente dans le signal,

- obtention d'informations de reconstruction de vecteurs de contrôle pour au moins un bloc donné de l'image de référence,

- prédiction de l'image courante comprenant les sous-étapes suivantes, pour ledit au moins un bloc donné :

  - détermination, à partir des informations de reconstruction, d'une pluralité de vecteurs de contrôle associés à l'image courante pour le bloc donné, et découpage en sous-blocs dudit bloc donné tenant compte d'un mouvement entre l'image de référence et l'image courante, définissant une première partition,

  - détermination, à partir des informations de reconstruction, d'une pluralité de vecteurs de contrôle associés à l'image à compenser pour le bloc donné, et découpage en sous-blocs du bloc donné tenant compte d'un mouvement entre l'image de référence et l'image à compenser, définissant une deuxième partition,

  - obtention d'un partitionnement commun en sous-blocs pour le bloc donné, dits sous-blocs de base, par comparaison des première et deuxième partitions ;

  - détermination d'un premier jeu de vecteurs de contrôle pour les sous-blocs de base, à partir des vecteurs de contrôle associés à l'image courante, et d'un second jeu de vecteurs de contrôle pour les sous-blocs de base, à partir des vecteurs de contrôle associés à l'image à compenser ;

  - compensation en mouvement d'au moins un sous-bloc de l'image à compenser correspondant à au moins un sous-bloc de base déplacé en mouvement à l'aide du second jeu de vecteurs de contrôle, vers au moins un sous-bloc de l'image courante correspondant à au moins un sous-bloc de base déplacé en mouvement à l'aide du premier jeu de vecteurs de contrôle.

Les caractéristiques et avantages relatifs à ce procédé de décodage sont les mêmes que ceux du procédé de codage. Par conséquent, ils ne sont pas détaillés plus amplement.

Dans un autre mode de réalisation, l'invention concerne un programme d'ordinateur comportant des instructions pour la mise en oeuvre du procédé de décodage décrit précédemment, lorsque ledit programme est exécuté par un processeur.

Ainsi, le procédé de décodage selon l'invention peut être mis en oeuvre de diverses manières, notamment sous forme câblée ou sous forme logicielle.

Enfin, l'invention concerne un dispositif de décodage d'un signal représentatif d'une séquence d'images tel que décrit précédemment, comprenant les moyens suivants, activés pour au moins une image courante :

- des moyens de détermination d'une image de référence et d'au moins une image à compenser utilisées pour coder l'image courante, à partir d'au moins une information d'identification présente dans le signal,

- des moyens d'obtention d'informations de reconstruction de vecteurs de contrôle pour au moins un bloc donné de l'image de référence,
- des moyens de prédiction de l'image courante comprenant les moyens suivants, activés pour ledit au moins un bloc donné :

  - des moyens de détermination, à partir des informations de reconstruction, d'une pluralité de vecteurs de contrôle associés à l'image courante pour le bloc donné, et des moyens de découpage en sous-blocs du bloc donné tenant compte d'un mouvement entre l'image de référence et l'image courante, définissant une première partition,
  - des moyens de détermination, à partir des informations de reconstruction, d'une pluralité de vecteurs de contrôle associés à l'image à compenser pour le bloc donné, et des moyens de découpage en sous-blocs du bloc donné tenant compte d'un mouvement entre l'image de référence et l'image à compenser, définissant une deuxième partition,
  - des moyens d'obtention d'un partitionnement commun en sous-blocs pour le bloc donné, dits sous-blocs de base, par comparaison des première et deuxième partitions ;
  - des moyens de détermination d'un premier jeu de vecteurs de contrôle pour les sous-blocs de base, à partir des vecteurs de contrôle associés à l'image courante et d'un second jeu de vecteurs de contrôle pour les sous-blocs de base, à partir des vecteurs de contrôle associés à l'image à compenser ;
  - des moyens de compensation en mouvement d'au moins un sous-bloc de l'image à compenser correspondant à au moins un sous-bloc de base déplacé en mouvement à l'aide du second jeu de vecteurs de contrôle, vers au moins un sous-bloc de l'image courante correspondant à au moins un sous-bloc de base déplacé en mouvement à l'aide du premier jeu de vecteurs de contrôle.

Un tel dispositif de décodage est notamment adapté à mettre en oeuvre le procédé de décodage décrit précédemment. Il s'agit par exemple d'un décodeur vidéo de type MPEG ou H.264, ou selon une future norme de compression vidéo, par exemple H.265.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- les figures 1A et 1B, présentées en relation avec l'art antérieur, illustrent respectivement les techniques de compensation en mouvement en arrière et en avant ;
- la figure 2 illustre les principales étapes du procédé de codage selon un mode de réalisation de l'invention ;
- les figures 3A et 3B présentent des exemples de première passe et de deuxième passe de découpage en sous-blocs ;
- les figures 4A à 4C illustrent respectivement une première partition, une deuxième partition, et un partitionnement commun, d'un bloc de l'image de référence ;
- la figure 5 présente les principales étapes mises en oeuvre côté décodage selon un mode de réalisation de l'invention ;
- les figures 6 et 7 présentent respectivement la structure d'un dispositif de codage et d'un dispositif de décodage selon un mode de réalisation particulier de l'invention.

### 5. Description d'un mode de réalisation de l'invention

*5.1 Principe général*

Le principe général de l'invention repose sur l'utilisation d'au moins une image intermédiaire pour prédire par compensation en mouvement en avant une image courante, notamment lorsque l'image courante est très éloignée (temporellement ou par son contenu) d'une image de référence. On effectue alors une compensation en mouvement de l'image courante à partir d'au moins une ou plusieurs images à compenser en mouvement (images intermédiaires), qui sont plus proches de l'image courante que de l'image de référence.

Pour ce faire, on définit à la fois le mouvement de l'image courante par rapport à l'image de référence, et le mouvement de la ou des images compensées en mouvement par rapport à l'image de référence.

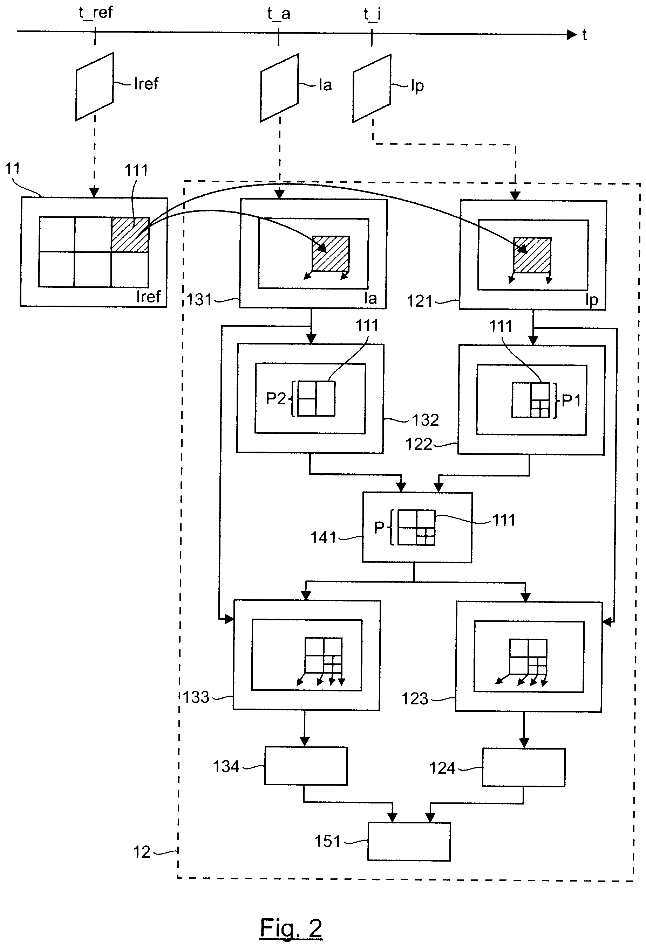

On présente en relation avec la figure 2, les principales étapes du procédé de codage selon un mode de réalisation de l'invention. On considère par exemple une séquence comprenant, entre autres, une image de référence Iref correspondant à un instant t_ref de la séquence, une image à compenser en mouvement Ia correspondant à un instant t_a de la séquence, et une image courante à prédire Ip correspondant à un instant t_i de la séquence.

On note que l'image à compenser en mouvement la a été précédemment codée/décodée. Cette image la est utilisée pour la prédiction de l'image courante à l'aide d'une compensation en mouvement en avant.

Selon ce mode de réalisation, l'image de référence Iref est découpée en blocs au cours d'une étape de découpage en blocs 11. On détermine par la suite le mouvement de ces blocs dans les images à compenser la et courante Ip.

On cherche ensuite à prédire l'image courante Ip au cours d'une étape de prédiction 12. Cette étape de prédiction 12 comprend les étapes suivantes mises en oeuvre pour au moins un bloc donné 111 de l'image de référence Iref :

- détermination 121 d'une pluralité de vecteurs de contrôle associés à l'image courante Ip pour le bloc donné 111, représentatifs chacun d'un déplacement entre un point caractéristique du bloc donné 111 et une position correspondante dans l'image courante Ip ;
- découpage en sous-blocs 122 du bloc donné 111 de l'image de référence tenant compte d'un mouvement entre l'image de référence Iref et l'image courante Ip, définissant une première partition P1 ;
- détermination 131 d'une pluralité de vecteurs de contrôle associés à l'image à compenser la pour le bloc donné 111, représentatifs chacun d'un déplacement entre un point caractéristique du bloc donné 111 et une position correspondante dans l'image à compenser la ;
- découpage en sous-blocs 132 du bloc donné 111 de l'image de référence tenant compte d'un mouvement entre l'image de référence Iref et l'image à compenser la, définissant une deuxième partition P2 ;
- obtention 141 d'un partitionnement commun P en sous-blocs pour le bloc donné 111, dits sous-blocs de base, par comparaison des première partition P1 et deuxième partition P2. Par exemple, si la première partition P1 et la deuxième partition P2 sont identiques, alors le partitionnement commun P est égal à P1 qui est égal à P2. Si la première partition P1 et la deuxième partition P2 sont différentes, le partitionnement commun P est défini par l'union des deux partitions P1 et P2. Par exemple, comme illustré en figure 2, le partitionnement commun P définit sept sous-blocs dits sous-blocs de base ;
- détermination 123 d'un premier jeu de vecteurs de contrôle pour les sous-blocs de base, à partir des vecteurs de contrôle associés à l'image courante Ip ;
- détermination 133 d'un second jeu de vecteurs de contrôle pour les sous-blocs de base, à partir des vecteurs de contrôle associés à l'image à compenser la ;
- premier déplacement 124 en mouvement d'au moins un sous-bloc de base de l'image de référence Iref vers l'image courante Ip, à l'aide du premier jeu de vecteurs de contrôle ;
- deuxième déplacement 134 en mouvement d'au moins un sous-bloc de base de l'image de référence Iref vers l'image à compenser la, à l'aide du second jeu de vecteurs de contrôle ;
- prédiction 151 du sous-bloc de l'image courante Ip obtenu au cours de la première étape de déplacement 124 à partir du sous-bloc de l'image à compenser la obtenu au cours de la deuxième étape de déplacement 134.

Les sous-blocs de base ainsi déplacés peuvent donc se détacher, engendrant ainsi des zones de découvrement, ou bien encore se chevaucher.

L'invention propose ainsi une technique de prédiction utilisant une ou plusieurs images compensées en mouvement en avant améliorant la prédiction obtenue à partir d'une seule image de référence et ne présentant pas les inconvénients des techniques de l'art antérieur.

Par exemple, si on se place dans le contexte d'une séquence d'images pouvant être représentée à l'aide de tubes de mouvement, comme décrit dans la demande de brevet français FR 2 917 872 précitée, et si l'on considère que le bloc donné dans l'image de référence et les blocs correspondants dans les images à compenser et courante appartiennent à un même tube de mouvement, initialisé dans l'image de référence, alors on a, en reprenant les notations précédentes :

- $t\_ref$ : instant de référence défini pour les tubes de mouvement ou instant de création des tubes de mouvement, correspondant à l'image de référence Iref ;
- $t\_a$ (potentiellement $t\_b$) : instant d'images déjà codées/décodées utilisées pour la prédiction d'une image courante à prédire à l'aide d'une compensation en mouvement en avant, correspondant à l'image à compenser en mouvement la (et éventuellement plusieurs autres images à compenser Ib) ;
- $t\_i$ : instant « intermédiaire » où l'on souhaite projeter les images codées/décodées utilisées pour la prédiction, correspondant à l'image courante à prédire.

L'invention propose alors de réaliser une compensation en mouvement d'un bloc défini à l'instant $t\_ref$, en utilisant la texture d'un bloc défini à l'instant $t\_a$ (potentiellement aussi à l'instant $t\_b$) pour reconstruire les valeurs d'un bloc défini à l'instant $t\_i$.

Cette solution offre notamment les avantages suivants:

- elle permet l'utilisation de « textures » mises à jour, grâce à la compensation en mouvement effectuée à partir des images à compenser (Ia, éventuellement Ib) précédemment codées/décodées ;
- il n'est pas nécessaire de repasser par l'image de référence Iref définie à l'instant t_ref pour avoir un codage ou une reconstruction de l'image courante à l'instant t_i, conférant une moindre complexité à la solution proposée et évitant les multiples filtrages d'interpolation liés aux multiples compensations en mouvement selon l'art antérieur ;

- au niveau du codage des vecteurs de mouvement, au plus un seul vecteur de mouvement est nécessaire pour un sous-bloc à prédire dans l'image courante. On rappelle qu'il est possible d'utiliser plusieurs images à compenser pour la prédiction. Comme les informations de mouvement entre ces images à compenser et l'image de référence sont déjà connues, il n'est pas nécessaire de coder plusieurs vecteurs de mouvement, contrairement à ce qui est traditionnellement fait pour des images "B" dans des codeur hybrides tel MPEG4-AVC ;
- elle permet de limiter la nécessité de création de nouveaux tubes de mouvement à des instants t_ref différents, lorsque l'image courante est trop éloignée de l'image de référence, et permet ainsi de gagner en compression ;
- la trajectoire de mouvement utilisée correspond à celle du bloc à prédire.

Dans ce contexte d'une séquence d'images représentée à l'aide de tubes de mouvement, l'invention propose une technique de prédiction utilisant un seul vecteur de mouvement codé par bloc et une ou plusieurs images à compenser, ces images à compenser n'étant pas l'image de référence par rapport à laquelle le mouvement a été défini. Ce mode de réalisation de l'invention permet donc d'améliorer la qualité de prédiction d'une image courante comprenant un bloc appartenant à un tube de mouvement, lorsque l'image courante est éloignée de l'image de référence dans laquelle est initialisé le tube, en utilisant une technique de compensation en mouvement basée sur des vecteurs de contrôle, telle que décrite dans la demande de brevet français n°0854465 précitée, tout en l'adaptant pour pouvoir projeter une image (image à compenser en mouvement) qui n'est pas l'image de création des tubes de mouvement (image de référence) sur une image à prédire (image courante) en limitant la complexité et les problèmes d'interpolation.

De manière plus générale, la technique de prédiction proposée permet de diminuer le coût de codage du résidu de prédiction de l'image courante à coder, sans augmentation du coût de codage des vecteurs de mouvement, et offre une complexité opératoire limitée.

*5.2 Description d'un mode de réalisation du procédé de codage*

On détaille ci-après la mise en oeuvre des différentes étapes du procédé de codage de la figure 2, selon un mode de réalisation particulier. Par souci de clarté, on utilise les mêmes références numériques que celles définies pour la figure 2.

On considère de nouveau une image courante à prédire Ip, une image de référence Iref et au moins une image à compenser en mouvement pour construire la prédiction Ia.

*A) Détermination des vecteurs de contrôle*

Comme indiqué en relation avec la figure 2, on détermine au cours d'une étape 121 (respectivement 131), les vecteurs de contrôle associés à l'image courante Ip (respectivement à l'image à compenser Ia). Ces vecteurs de contrôle pointent de l'image de référence Iref vers l'image courante à prédire Ip (respectivement vers l'image à compenser Ia).

De tels vecteurs de contrôle sont plus précisément décrits dans la demande de brevet français n°0854465 précitée.

*B) Obtention des première et deuxième partitions*

*1) Principe*

Au cours d'une étape 122 (respectivement 132), le bloc donné 111 est découpé en sous-blocs, en tenant compte d'un mouvement entre l'image de référence Iref et l'image courante Ip (respectivement entre l'image de référence Iref et l'image à compenser Ia).

Plus précisément, on rappelle que les blocs sont définis sur la grille régulière de l'image de référence Iref (étape 11 de découpage en blocs de l'image de référence). On cherche alors à exprimer le mouvement des blocs dans l'image à compenser Ia et dans l'image courante Ip par rapport à cet instant de référence.

L'étape de découpage 122 (respectivement 132) peut mettre en oeuvre deux passes successives de découpage en sous-blocs de taille adaptative. Chacune de ces passes peut mettre en oeuvre au moins une itération de découpage, jusqu'à atteindre un premier (respectivement deuxième) critère d'arrêt de découpage prédéterminé. Les premier et deuxième critères d'arrêt de découpage peuvent être différents. Par exemple, de tels critères tiennent compte d'un nombre prédéfini de sous-blocs pour le bloc donné, d'une information de similitude entre les vecteurs de contrôle, d'une taille du bloc donné, d'une taille minimale d'un sous-bloc, d'un indicateur représentatif d'un nombre de découpage, etc. Par exemple, l'information de similitude correspond à une différence maximale entre les vecteurs de contrôle. Lorsque cette différence est inférieure à un seuil, les sous-blocs ne sont plus découpés.

De cette façon, tous les blocs de l'image de référence ne sont pas nécessairement découpés en sous-blocs, et le découpage en sous-blocs peut varier d'un bloc à l'autre de l'image. Le partitionnement en sous-blocs est donc adaptatif.

*2) Première passe de découpage*

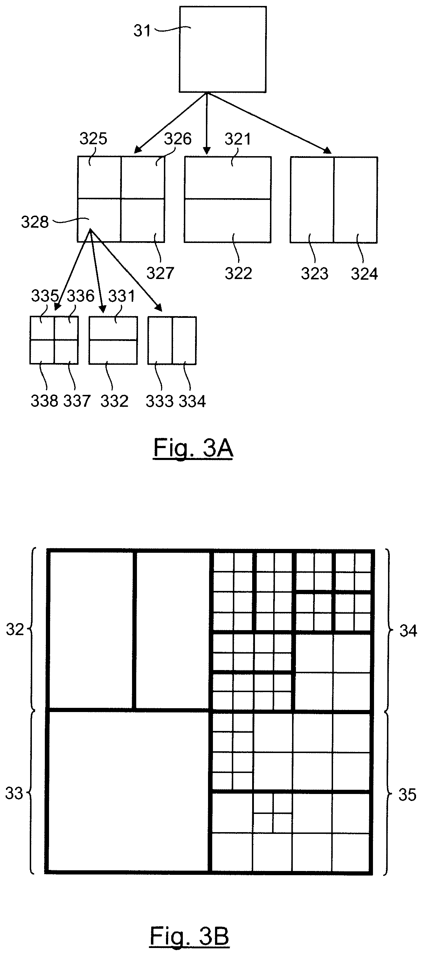

La figure 3A illustre le principe de la première passe de découpage en sous-blocs de taille adaptative avec un vecteur de mouvement codé par sous-bloc. Sur cette figure, cette passe met en oeuvre deux itérations de découpage. Dans un cadre général, plusieurs niveaux d'itérations peuvent être définis.

En d'autres termes, les blocs d'une image de référence peuvent être de taille adaptative, c'est-à-dire qu'ils peuvent être redécoupés afin d'estimer le mouvement à l'aide de blocs de taille plus petite, dits sous-blocs, que les blocs obtenus lors du découpage de l'image de référence. Par exemple, au cours d'une première itération, un bloc 31 d'une image de référence peut être découpé en deux sous-blocs horizontaux 321, 322, en deux sous-blocs verticaux 323, 324 ou en quatre sous-blocs carrés 325, 326, 327, 328, en divisant une direction ou les deux directions par deux. Au cours d'une itération suivante, les sous-blocs carrés 325, 326, 327, 328 peuvent à leur tour être découpés. Par exemple, le sous-bloc carré 328 peut être découpé en deux sous-blocs horizontaux 331, 332, en deux sous-blocs verticaux 333, 334 ou en quatre sous-blocs carrés 335, 336, 337, 338.

Un vecteur de mouvement est associé à chaque sous-bloc issu de la découpe en sous-blocs de taille adaptative. Le découpage des blocs en sous-blocs permet d'améliorer l'estimation du mouvement et d'adapter la taille des blocs au contour des objets.

*3) Deuxième passe de découpage*

La figure 3B illustre un exemple de première passe suivie d'une deuxième passe de découpage en sous-blocs de taille adaptative pour la compensation en mouvement.

Plus précisément, les blocs ou sous-blocs issus d'un découpage en sous-blocs de taille adaptative peuvent être redécoupés pour la compensation en mouvement. Des vecteurs de contrôle sont alors définis pour les blocs ou sous-blocs, à partir des vecteurs de contrôle du bloc ou sous-bloc de niveau supérieur, en tenant compte des connexions codées pour le bloc ou le sous-bloc de niveau supérieur. Ces connexions indiquent si le bloc ou sous-bloc est connecté au bloc ou sous-bloc situé au-dessus ou à gauche du bloc ou sous-bloc. Un exemple de détermination des vecteurs de contrôle pour des sous-blocs à partir de vecteurs de contrôle pour un bloc est décrit dans la demande de brevet français n°0854465 précitée. Par exemple, le bloc ou sous-bloc $b_C$ est découpé en quatre sous-blocs $b_{SC1}$, $b_{SC2}$, $b_{SC3}$ et $b_{SC4}$ (non représentés sur la figure 3B). On détermine quatre vecteurs de contrôle pour le bloc $b_C$, chacun étant associé à un sommet ou coin du bloc.

Par exemple, on note :

- $v_{br}$ le vecteur de contrôle associé au coin situé en bas à droite du bloc $b_C$ ;
- $v_{bl}$ le vecteur de contrôle associé au coin situé en bas à gauche du bloc $b_C$ ;
- $v_{tr}$ le vecteur de contrôle associé au coin situé en haut à droite du bloc $b_C$ ;
- $v_{tl}$ le vecteur de contrôle associé au coin situé en haut à gauche du bloc $b_C$.

Les vecteurs de contrôle attachés au bloc $b_C$ sont interpolés pour définir de nouveaux vecteurs de contrôle pour les sous-blocs.

Par exemple, on note :

- $v_{ml}$ le vecteur de contrôle associé au coin situé en bas à gauche du sous-bloc $b_{SC1}$, correspondant également au coin situé en haut à gauche du sous-bloc $b_{SC3}$ ;
- $v_{tm}$ le vecteur de contrôle associé au coin situé en haut à droite du sous-bloc $b_{SC1}$, correspondant également au coin situé en haut à gauche du sous-bloc $b_{SC2}$ ;
- $v_{mr}$ le vecteur de contrôle associé au coin situé en bas à droite du sous-bloc $b_{SC2}$, correspondant également au coin situé en haut à droite du sous-bloc $b_{SC4}$ ;
- $v_{bm}$ le vecteur de contrôle associé au coin situé en bas à droite du sous-bloc $b_{SC3}$, correspondant également au coin situé en bas à gauche du sous-bloc $b_{SC4}$ ; et
- $v_{mm}$ le vecteur de contrôle associé au coin situé en bas à droite du sous-bloc $b_{SC1}$, correspondant également au coin situé en bas à gauche du sous-bloc $b_{SC2}$, au coin situé en haut à droite du sous-bloc $b_{SC3}$, et au coin situé en haut à gauche du sous-bloc $b_{SC4}$.

Les vecteurs de contrôle pour les sous-blocs sont alors déterminés à partir des vecteurs de contrôle pour le bloc $b_C$, par exemple de la manière suivante : $v_{tm} = \dfrac{v_{tl} + v_{tr}}{2}$, $\quad v_{bm} = \dfrac{v_{bl} + v_{br}}{2}$, $\quad v_{ml} = \dfrac{v_{tl} + v_{bl}}{2}$,

$v_{mr} = \dfrac{v_{tr} + v_{br}}{2}$ et $v_{mm} = \dfrac{v_{tl} + v_{tr} + v_{bl} + v_{br}}{4}$ .

Ce processus de découpage peut être itéré jusqu'à atteindre un critère d'arrêt de découpage, tel que décrit ci-dessus.

Au cours de cette deuxième passe de découpage, on ne code pas de vecteurs de mouvement supplémentaires pour les sous-blocs (uniquement les vecteurs de contrôle obtenus à la fin de la première passe sont codés).

Comme illustré en figure 3B, si on considère un ensemble de quatre blocs 32, 33, 34, 35 (où la taille du bloc 33 est représentée par le bloc hachuré), on obtient après les deux passes de découpage en ensemble de sous-blocs. Sur cette figure, certains blocs ou sous-blocs ont été découpés en sous-blocs de taille adaptative au cours de la première passe (partitionnement illustré en traits en gras), puis certains blocs ou sous-blocs ont été redécoupés pour la compensation en mouvement au cours de la deuxième passe (partitionnement illustré en traits fins).

*C) Détermination d'un partitionnement commun*

Comme déjà indiqué, la compensation en mouvement d'un bloc à partir d'une image à compenser la (différente d'une image de référence Iref) sur une image courante à prédire Ip doit prendre en compte le mouvement du bloc donné 111, défini dans l'image de référence Iref, à la fois dans l'image à compenser la et dans l'image courante Ip. Le mouvement dans chaque image à compenser la et courante Ip est estimé par rapport à la même image référence Iref.

Or on rappelle que le bloc donné 111 de l'image de référence peut avoir été partitionné en sous-blocs de taille adaptative dans l'image à compenser la (c'est-à-dire en tenant compte d'un mouvement entre l'image de référence Iref et l'image à compenser la) et/ou dans l'image courante Ip (c'est-à-dire en tenant compte d'un mouvement entre l'image de référence Iref et l'image courante Ip). On rappelle que le découpage ou partitionnement du bloc donné 111 peut être différent dans l'image courante Ip et dans l'image à compenser la.

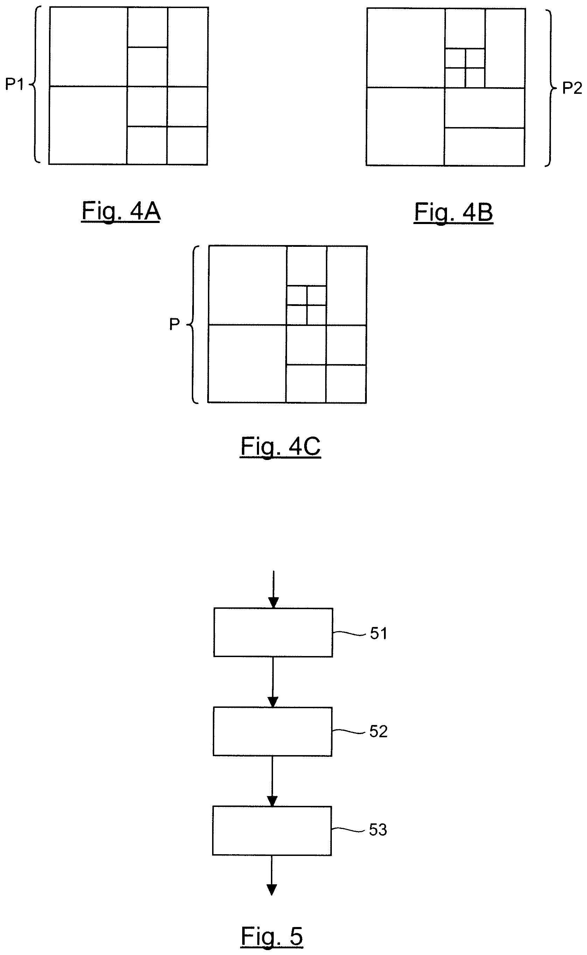

Ainsi, à l'issue de l'étape de découpage 122, on obtient une première partition P1 correspondant à un découpage en sous-blocs du bloc donné 111, lié à l'information de mouvement de l'image de référence Iref vers l'image courante Ip. Un exemple de première partition du bloc donné 111 est illustré en figure 4A.

A l'issue de l'étape de découpage 132, on obtient une deuxième partition P2 correspondant à un découpage en sous-blocs du bloc donné 111, lié à l'information de mouvement de l'image de référence Iref vers l'image à compenser la. Un exemple de deuxième partition du bloc donné 111 est illustré en figure 4B.

Il est alors nécessaire de trouver un partitionnement commun dans les deux images afin d'associer les sous-blocs du bloc donné 111 dans l'image courante Ip à ceux du bloc donné 111 dans l'image à compenser la.

Pour ce faire, les deux partitions P1 et P2 sont comparées au cours d'une étape 141, afin d'obtenir un partitionnement commun P entre ces partitions P1 et P2, tel qu'illustré en figure 4C. Ce partitionnement commun correspond à l'union des partitions P1 (liée au mouvement vers l'image courante Ip) et P2(liée au mouvement vers l'image à compenser la), et définit des sous-blocs de base correspondant aux plus petits sous-blocs obtenus.

A chaque niveau de partitionnement permettant d'aboutir au partitionnement commun P, la détermination des vecteurs de contrôle des nouveaux sous-blocs est fonction des connexions du bloc donné 111 à ces voisins dans l'image courante Ip, et respectivement dans l'image à compenser la.

Ainsi, si le bloc donné 111, dans l'image courante Ip (respectivement dans l'image à compenser la), n'est connecté à aucun bloc voisin, les vecteurs de contrôle des quatre nouveaux sous-blocs prennent la valeur des vecteurs de contrôle du sous-bloc au niveau précédent.

Si le bloc donné 111 est connecté à un de ces voisins :

- si le critère de subdivision en sous-blocs (i.e. le critère d'arrêt) est atteint, les vecteurs de contrôle des nouveaux sous-blocs (sous-blocs de base) prennent la valeur des vecteurs de contrôle du sous-bloc au niveau précédent (c'est-à-dire au niveau de partitionnement supérieur) ;

- si le critère de subdivision en sous-blocs n'est pas atteint, les vecteurs de contrôle des nouveaux sous-blocs sont déterminés comme décrit au paragraphe B.3.

*D) Compensation d'un bloc donné à partir d'une image à compenser la sur une image courante Ip*

La compensation du bloc donné 111 dans l'image courante Ip à partir d'une image à compenser la (qui n'est pas une image de référence, dans laquelle sont initialisés les tubes de mouvement par exemple) peut être effectuée en appliquant l'algorithme suivant, pour chaque sous-bloc de base extrait du partitionnement commun P du bloc donné 111.

On note que le sous-bloc de base peut être déplacé de l'image de référence Iref vers l'image courante Ip ou l'image à compenser la selon un mouvement pixellique, correspondant à un déplacement multiple de pixels entiers (i.e déplaçant un pixel sur un autre pixel) ou sous-pixellique, correspondant à un déplacement d'un pixel sur un point qui n'est pas un pixel. Dans ce dernier cas, il est nécessaire d'interpoler la texture compensée pour obtenir une valeur de texture sur les pixels qui entourent ce point. On décompose alors le mouvement sous-pixellique en un mouvement pixellique et un résidu sous-pixellique.

*1) Cas d'un mouvement pixellique*

Pour chaque vecteur de contrôle vi d'un sous-bloc de base, on effectue les opérations suivantes pour tous les pixels (x,y) du sous-bloc de base dans l'image de référence Iref :

- on accumule la valeur wi*wt*Ia(x+dax, y+day) aux points Ipred(x+dxCurr,y+dyCurr) :

$$\text{Ipred(x+dxCurr,y+dyCurr)} \mathrel{+}= \text{wi*wt*Ia(x+dax, y+day),}$$

- on accumule la valeur wi*wt aux points IWpred(x+dxCurr,y+dyCurr) :

$$\text{IWpred(x+dxCurr,y+dyCurr)} \mathrel{+}= \text{wi*wt.}$$

avec :

- Ipred une image d'accumulation servant à construire la prédiction de l'image courante Ip ;
- IWpred une image de poids servant à normaliser l'image prédite ;
- wi le poids associé au vecteur de contrôle vi du sous-bloc de base ;
- wt le poids associé à l'image à compenser la. Si plusieurs images à compenser la sont utilisées pour la prédiction de l'image courante Ip, le poids wt est fonction de la distance entre l'image à compenser et l'image courante. Si une seule image est utilisée wt est égal à 1 ;
- (dxCurr, dyCurr) la valeur du vecteur de contrôle vi du sous-bloc de base dans l'image courante que l'on cherche à prédire ;
- (dax, day) la valeur du vecteur de contrôle vi du sous-bloc de base dans l'image à compenser la.

*2) Cas d'un mouvement sous-pixellique*

Pour chaque vecteur de contrôle vi d'un sous-bloc de base, on effectue les opérations suivantes, en reprenant les notations précédemment définies :

- récupération du mouvement pixellique le plus proche, en décomposant le mouvement sous-pixellique en un mouvement pixellique (idxCurr, idyCurr) et un résidu sous-pixellique (fdxCurr, fdyCurr) :

  ○ dxCurr = idxCurr + fdxCurr,
  ○ dyCurr = idyCurr + fdyCurr,

  avec (idxCurr,idyCurr) deux entiers tels que les résidus de mouvement sous-pixelliques (fdxCurr, fdyCurr) soient compris dans l'intervalle ]-0,5;0,5[;
- pour tout point (x,y) du sous-bloc de base dans l'image de référence Iref, compensation :

  ○ on accumule la valeur wi*wt*Ia(x+dax-fdxCurr, y+day-fdyCurr) aux points Ipred(x+idxCurr,y+idyCurr) : Ipred(x+idxCurr,y+idyCurr) += wi*wt*Ia(x+dax-fdxCurr, y+day-fdyCurr),
  ○ on accumule la valeur wi*wt aux points IWpred(x+idxCurr,y+idyCurr): IWpred(x+idxCurr,y+idyCurr) += wi*wt.

Ainsi, au pixel correspondant à la position (idxCurr,idyCurr) de l'image courante on accumule la texture de l'image à compenser déplacée par le vecteur (dax-fdxCurr, day-fdyCurr). En d'autres termes, on enlève le résidu sous-pixellique du mouvement dans l'image courante au déplacement de l'image à compenser.

*E) Compensation d'une ou plusieurs images à compenser Ia sur l'image à prédire Ip*

L'image Ipred servant à construire la prédiction de l'image courante Ip, ainsi que l'image de poids IWpred servant à normaliser l'image de prédiction obtenue, sont tout d'abord initialisées à 0.

Selon ce mode de réalisation, les étapes de détermination d'un partitionnement commun (paragraphe C) et de compensation d'un bloc (paragraphe D) décrites précédemment sont mises en oeuvre pour toutes les images à compenser Ia (qui ne sont pas des images de référence) servant pour la prédiction de l'image courante Ip.

Une fois toutes les images Ia servant à la prédiction compensées en mouvement, l'image Ipred est normalisée à l'aide de l'image de poids IWpred, en utilisant l'algorithme suivant :

pour tout x dans l'image Ipred,

- si IWpred(x) est différent de 0, alors Ipred(x) est divisé par IWpred(x)
- sinon Ipred(x) prend une valeur UNDEF (UNDEF étant défini à une valeur prédéfinie, par exemple la valeur 0).

*F) Remplissage des valeurs non prédites dans l'image Ipred*

Une technique classique de restauration (en anglais « inpainting », telle que proposée dans le document « Image Inpainting » de M. Bertalmio et al.) peut être utilisée afin de remplir les éventuels trous restant dans l'image Ipred, et obtenir une prédiction de l'image courante. Ces trous correspondent aux pixels dont la valeur a été positionnée à UNDEF.

L'image Ipred est ensuite utilisée comme image de prédiction pour l'image courante à coder Ip.

*5.3 Signal*

Une fois les images codées, le signal représentatif de la séquence d'images codées selon le procédé de codage décrit ci-dessus peut être transmis à un décodeur et/ou stocké sur un support d'enregistrement.

Le signal transporte également des informations particulières.

Plus précisément, un tel signal comprend au moins une information d'identification signalant une image de référence et au moins une image à compenser en mouvement utilisées lors du codage d'une image courante, et au moins une information de reconstruction de vecteurs de contrôle pour un bloc donné de l'image de référence.

Les informations d'identification permettent de préciser quelles sont les images de référence et à compenser en mouvement qui ont été utilisées lors du codage de l'image courante. De cette façon, le décodeur pourra utiliser ces mêmes images pour réaliser la prédiction de l'image courante.

Les informations de reconstruction comprennent par exemple des indicateurs flag_lc et flag_tc.

*5.4 Décodage*

On présente désormais en relation avec la figure 5 les principales étapes de décodage d'un signal représentatif d'une séquence d'images tel que décrit précédemment, mises en oeuvre dans un décodeur vidéo de type H.264 par exemple.

Un tel décodeur met en oeuvre les étapes suivantes, pour au moins une image courante :

- détermination 51 d'une image de référence et d'au moins une image à compenser utilisées lors d'un codage de l'image courante, à partir d'au moins une information d'identification présente dans le signal,
- obtention 52 d'informations de reconstruction de vecteurs de contrôle pour au moins un bloc donné de l'image de référence,
- prédiction 53 de l'image courante.

Cette étape de prédiction 53 met en oeuvre les mêmes sous-étapes que l'étape de prédiction 12, et n'est pas décrite plus en détail ici.

Il est ensuite possible d'ajouter à la prédiction de l'image courante un résidu d'erreur de prédiction déterminé au codage et transmis dans le signal, de façon à reconstruire l'image courante.

*5.5 Structures du codeur et du décodeur*

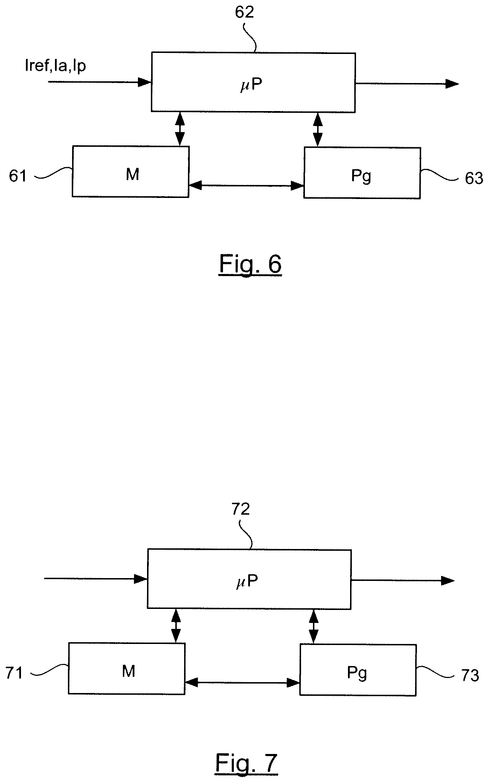

On présente finalement, en relation avec les figures 6 et 7, les structures simplifiées d'un dispositif de codage et d'un dispositif de décodage mettant respectivement en oeuvre une technique de codage et une technique de décodage telles que décrites ci-dessus.

Un dispositif de codage tel qu'illustré en figure 6 comprend une mémoire 61 comprenant une mémoire tampon, une unité de traitement 62, équipée par exemple d'un microprocesseur $\mu$P, et pilotée par le programme d'ordinateur 63, mettant en oeuvre le procédé de codage selon l'invention.

A l'initialisation, les instructions de code du programme d'ordinateur 63 sont par exemple chargées dans une mémoire RAM avant d'être exécutées par le processeur de l'unité de traitement 62. L'unité de traitement 62 reçoit une séquence d'images comprenant au moins une image de référence Iref, une image à compenser la, et une image courante Ip. Le microprocesseur de l'unité de traitement 62 met en oeuvre les étapes du procédé de codage décrit précédemment, selon les instructions du programme d'ordinateur 63, pour déterminer une prédiction de l'image courante Ip. Pour cela, le dispositif de codage comprend, outre la mémoire tampon 61, des moyens de découpage de l'image de référence en blocs et des moyens de prédiction associant au moins un bloc de l'image courante Ip de la séquence à au moins un bloc correspondant dans au moins une image à compenser en mouvement la de la séquence, délivrant une prédiction de l'image courante.

Ces moyens sont pilotés par le microprocesseur de l'unité de traitement 62.

Un dispositif de décodage tel qu'illustré en figure 7 comprend une mémoire 71 comprenant une mémoire tampon, une unité de traitement 72, équipée par exemple d'un microprocesseur $\mu$P, et pilotée par le programme d'ordinateur 73, mettant en oeuvre le procédé de décodage selon l'invention.

A l'initialisation, les instructions de code du programme d'ordinateur 73 sont par exemple chargées dans une mémoire RAM avant d'être exécutées par le processeur de l'unité de traitement 72. L'unité de traitement 72 reçoit en entrée un signal représentatif d'une séquence d'images comprenant des informations d'identification signalant une image de référence et une ou plusieurs images à compenser en mouvement utilisées pour coder une image courante, et au moins une information de reconstruction des vecteurs de contrôle pour un bloc donné de l'image de référence. Le microprocesseur de l'unité de traitement 72 met en oeuvre les étapes du procédé de décodage décrit précédemment, selon les instructions du programme d'ordinateur 73, pour déterminer une prédiction de l'image courante. Pour cela, le dispositif de décodage comprend, outre la mémoire tampon 71, des moyens de détermination d'une image de référence et d'au moins une image à compenser utilisées lors d'un codage de l'image courante, à partir d'au moins une information d'identification présente dans le signal, des moyens d'obtention d'informations de reconstruction de vecteurs de contrôle pour au moins un bloc donné de l'image de référence, et des moyens de prédiction de l'image courante délivrant une prédiction de l'image courante. Ces moyens sont pilotés par le microprocesseur de l'unité de traitement 72.

**Revendications**

1. Procédé de codage d'une séquence d'images mettant en oeuvre une prédiction d'au moins un bloc d'une image courante (Ip) de ladite séquence à partir d'un bloc d'une image de référence (Iref) préalablement découpée en blocs, ladite prédiction associant au moins un bloc d'une image courante (Ip) de ladite séquence à au moins un bloc correspondant dans au moins une image intermédiaire (la) temporellement localisée entre ladite image de référence et ladite image courante, à compenser en mouvement en avant, la ou lesdites images intermédiaires ayant été précédemment codées, comprenant les étapes suivantes :

   - détermination (121) d'une première pluralité de vecteurs de mouvement, dits vecteurs de contrôle, associés à l'image courante, lesdits vecteurs de contrôle étant représentatifs chacun d'un déplacement entre un sommet dudit bloc donné de l'image de référence et une position correspondante dudit sommet dans l'image courante,
   - découpage (122), en tenant compte du mouvement entre l'image de référence et l'image courante, dudit bloc donné en sous-blocs mettant en oeuvre au moins une itération de découpage, jusqu'à atteindre, lorsque ledit découpage met en oeuvre au moins deux itérations, un premier critère d'arrêt de découpage prédéterminé, définissant une première partition,
   - détermination (131) d'une seconde pluralité de vecteurs de mouvement, dits vecteurs de contrôle associés à l'image intermédiaire, représentatifs chacun d'un déplacement entre un sommet dudit bloc donné de l'image de référence et une position correspondante dudit sommet dans l'image intermédiaire,
   - découpage (132), en tenant compte du mouvement entre l'image de référence et l'image intermédiaire, dudit bloc donné en sous-blocs mettant en oeuvre au moins une itération de découpage, jusqu'à atteindre, lorsque ledit découpage met en oeuvre au moins deux itérations, un deuxième critère d'arrêt de découpage prédéterminé, définissant une deuxième partition,
le procédé est **caractérisé en ce que** lesdits premier et deuxième critères d'arrêt de découpage appartiennent au groupe comprenant :

- une taille minimale d'un sous-bloc ;
- un nombre de découpages maximal ;
- une différence entre les vecteurs de contrôle associés à deux sous-blocs inférieure à un seuil prédéterminé,

et **en ce qu'**il comprend l'obtention d'un partitionnement commun (141) en sous-blocs pour ledit bloc donné, dits sous-blocs de base, par union desdites première et deuxième partitions, et une prédiction de ladite image courante à partir de ladite image intermédiaire, ladite prédiction comprenant les étapes suivantes :
- détermination (123) d'un premier jeu de vecteurs de contrôle pour lesdits sous-blocs de base, à partir des vecteurs de contrôle associés au bloc de l'image courante,
- détermination (133) d'un second jeu de vecteurs de contrôle pour lesdits sous-blocs de base, à partir des vecteurs de contrôle associés au bloc de l'image intermédiaire,
- compensation en mouvement (134) en avant d'un sous-bloc de base à l'aide dudit second jeu de vecteurs de contrôle délivrant un sous-bloc de ladite image intermédiaire,
- prédiction de ladite image courante par compensation en mouvement en avant (124) dudit sous-bloc de ladite image intermédiaire vers un sous-bloc correspondant de ladite image courante à l'aide dudit premier jeu de vecteurs de contrôle.

2. Procédé de codage selon la revendication 1, **caractérisé en ce qu'**au moins une desdites étapes de découpage (122, 132) en sous-blocs dudit bloc donné met en oeuvre deux passes successives de découpage en sous-blocs de taille adaptative.

3. Procédé de codage selon la revendication 1, **caractérisé en ce qu'**il comprend une étape d'insertion, dans un signal représentatif de ladite séquence, d'au moins une information d'identification signalant ladite image de référence et la ou lesdites images intermédiaires utilisées pour coder ladite image courante, et au moins une information de reconstruction desdits vecteurs de contrôle pour ledit bloc donné.

4. Programme d'ordinateur comportant des instructions pour la mise en oeuvre du procédé de codage selon la revendication 1 lorsque ledit programme est exécuté par un processeur.

5. Dispositif de codage d'une séquence d'images, comprenant des moyens de prédiction d'au moins un bloc d'une image courante (Ip) de ladite séquence à partir d'un bloc d'une image de référence (Iref) préalablement découpée en blocs, lesdits moyens de prédiction associant au moins un bloc d'une image courante (Ip) de ladite séquence à au moins un bloc correspondant dans au moins une image intermédiaire (Ia) temporellement localisée entre ladite image de référence et ladite image courante, à compenser en mouvement en avant,
la ou lesdites images intermédiaires ayant été précédemment codées,
le dispositif de codage comprenant :

- des moyens de détermination (121) d'une première pluralité de vecteurs de mouvement, dits vecteurs de contrôle associés à l'image courante, lesdits vecteurs de contrôle étant représentatifs chacun d'un déplacement entre un sommet dudit bloc donné de l'image de référence et une position correspondante dudit sommet dans l'image courante,
- des moyens de découpage (122), tenant compte du mouvement entre l'image de référence et l'image courante, dudit bloc donné en sous-blocs mettant en oeuvre au moins une itération de découpage, jusqu'à atteindre, lorsque ledit découpage met en oeuvre au moins deux itérations, un premier critère d'arrêt de découpage prédéterminé, définissant une première partition,
- des moyens de détermination (131) d'une seconde pluralité de vecteurs de mouvement, dits vecteurs de contrôle associés à l'image intermédiaire, représentatifs chacun d'un déplacement entre un sommet dudit bloc donné de l'image de référence et une position correspondante dudit sommet dans l'image intermédiaire,
- des moyens de découpage (132), tenant compte du mouvement entre l'image de référence et l'image intermédiaire, dudit bloc donné en sous-blocs mettant en oeuvre au moins une itération de découpage, jusqu'à atteindre, lorsque ledit découpage met en oeuvre au moins deux itérations, un deuxième critère d'arrêt de découpage prédéterminé, définissant une deuxième partition,
le dispositif de codage est **caractérisé en ce que** lesdits premier et deuxième critères d'arrêt de découpage appartiennent au groupe comprenant :

- une taille minimale d'un sous-bloc ;

  ◦ un nombre de découpages maximal ;
  ◦ une différence entre les vecteurs de contrôle associés à deux sous-blocs inférieure à un seuil prédéterminé,

et **en ce qu'**il comprend en outre des moyens d'obtention dudit partitionnement commun (141) en sous-blocs pour ledit bloc donné, dits sous-blocs de base, par union desdites première et deuxième partitions, et des moyens de prédiction de ladite image courante à partir de ladite image intermédiaire, lesdits moyens de prédiction comprenant :

- des moyens de détermination (123) d'un premier jeu de vecteurs de contrôle pour lesdits sous-blocs de base, à partir des vecteurs de contrôle associés au bloc de l'image courante,
- des moyens de détermination (133) d'un second jeu de vecteurs de contrôle pour lesdits sous-blocs de base, à partir des vecteurs de contrôle associés au bloc de l'image intermédiaire,
- des moyens de compensation (134) en mouvement en avant d'un sous-bloc de base à l'aide dudit second jeu de vecteurs de contrôle, délivrant un sous-bloc de ladite image intermédiaire,
- des moyens de prédiction de ladite image courante par compensation en mouvement en avant (124) dudit sous-bloc de ladite image intermédiaire vers un sous-bloc correspondant de ladite image courante à l'aide dudit premier jeu de vecteurs de contrôle.

6. Signal représentatif d'une séquence d'images codée selon le procédé de codage de la revendication 1, **caractérisé en ce qu'**il comprend au moins une information d'identification signalant une image de référence et au moins une image intermédiaire utilisées pour coder une image courante, et au moins une information de reconstruction de vecteurs de contrôle pour un bloc donné de ladite image de référence.

7. Procédé de décodage d'un signal représentatif d'une séquence d'images selon la revendication 6, comprenant les étapes suivantes, pour au moins une image courante :

- détermination d'une image de référence et d'au moins une image intermédiaire utilisées pour coder ladite image courante, à partir d'au moins une information d'identification présente dans ledit signal,
- obtention d'informations de reconstruction de vecteurs de contrôle pour au moins un bloc donné de ladite image de référence,
- prédiction de ladite image courante comprenant les sous-étapes suivantes, pour ledit au moins un bloc donné :

  - détermination, à partir desdites informations de reconstruction, d'une première pluralité de vecteurs de mouvement, dits vecteurs de contrôle associés à l'image courante, lesdits vecteurs de contrôle étant représentatifs chacun d'un déplacement entre un sommet dudit bloc donné de l'image de référence et une position correspondante dudit sommet dans l'image courante,
  - découpage, en tenant compte du mouvement entre l'image de référence et l'image courante, dudit bloc donné en sous-blocs mettant en oeuvre au moins une itération de découpage, jusqu'à atteindre, lorsque ledit découpage met en oeuvre au moins deux itérations, un premier critère d'arrêt de découpage prédéterminé, définissant une première partition,
  - détermination, à partir desdites informations de reconstruction, d'une seconde pluralité de vecteurs de mouvement, dits vecteurs de contrôle associés à l'image intermédiaire, représentatifs chacun d'un déplacement entre un sommet dudit bloc donné de l'image de référence et une position correspondante dudit sommet dans l'image intermédiaire,
  - découpage, en tenant compte du mouvement entre l'image de référence et l'image intermédiaire, dudit bloc donné en sous-blocs mettant en oeuvre au moins une itération de découpage, jusqu'à atteindre, lorsque ledit découpage met en oeuvre au moins deux itérations, un deuxième critère d'arrêt de découpage prédéterminé, définissant une deuxième partition,
  le procédé de décodage est **caractérisé en ce que** lesdits premier et deuxième critères d'arrêt de découpage appartiennent au groupe comprenant :

    - une taille minimale d'un sous-bloc ;
    - un nombre de découpages maximal ;
    ◦ une différence entre les vecteurs de contrôle associés à deux sous-blocs inférieure à un seuil prédéterminé,

et **en ce qu'**il comprend les étapes suivantes:

- obtention d'un partitionnement commun en sous-blocs pour ledit bloc donné, dits sous-blocs de base, par union desdites première et deuxième partitions,
- détermination d'un premier jeu de vecteurs de contrôle pour lesdits sous-blocs de base, à partir des vecteurs de contrôle associés au bloc de l'image courante,
- détermination d'un second jeu de vecteurs de contrôle pour lesdits sous-blocs de base, à partir des vecteurs de contrôle associés au bloc de l'image intermédiaire,
- compensation en mouvement en avant d'un sous-bloc de base à l'aide dudit second jeu de vecteurs de contrôle délivrant un sous-bloc de ladite image intermédiaire,
- prédiction de ladite image courante par compensation en mouvement en avant dudit sous-bloc de ladite image intermédiaire vers un sous-bloc correspondant de ladite image courante à l'aide dudit premier jeu de vecteurs de contrôle.

**8.** Programme d'ordinateur comportant des instructions pour la mise en oeuvre du procédé de décodage selon la revendication 7 lorsque ledit programme est exécuté par un processeur.

**9.** Dispositif de décodage d'un signal représentatif d'une séquence d'images selon la revendication 6, comprenant les moyens suivants, activés pour au moins une image courante :

- des moyens de détermination d'une image de référence et d'au moins une image intermédiaire utilisées pour coder ladite image courante, à partir d'au moins une information d'identification présente dans ledit signal,
- des moyens d'obtention d'informations de reconstruction de vecteurs de contrôle pour au moins un bloc donné de ladite image de référence,
- des moyens de prédiction de ladite image courante comprenant les moyens suivants, activés pour ledit au moins un bloc donné,

- des moyens de détermination, à partir desdites informations de reconstruction, d'une première pluralité de vecteurs de mouvement, dits vecteurs de contrôle, associés à l'image courante, lesdits vecteurs de contrôle étant représentatifs chacun d'un déplacement entre un sommet dudit bloc donné de l'image de référence et une position correspondante dudit sommet dans l'image courante,
- des moyens de découpage, tenant compte du mouvement entre l'image de référence et l'image courante, dudit bloc donné en sous-blocs mettant en oeuvre au moins une itération de découpage, jusqu'à atteindre, lorsque ledit découpage met en oeuvre au moins deux itérations, un premier critère d'arrêt de découpage prédéterminé, définissant une première partition,
- des moyens de détermination, à partir desdites informations de reconstruction, d'une seconde pluralité de vecteurs de mouvement, dits vecteurs de contrôle associés à l'image intermédiaire, représentatifs chacun d'un déplacement entre un sommet dudit bloc donné de l'image de référence et une position correspondante dudit sommet dans l'image intermédiaire,
- des moyens de découpage, tenant compte du mouvement entre l'image de référence et l'image intermédiaire, dudit bloc donné en sous-blocs mettant en oeuvre au moins une itération de découpage, jusqu'à atteindre, lorsque ledit découpage met en oeuvre au moins deux itérations, un deuxième critère d'arrêt de découpage prédéterminé, définissant une deuxième partition,

le dispositif de décodage est **caractérisé en ce que** lesdits premier et deuxième critères d'arrêt de découpage appartiennent au groupe comprenant :

- une taille minimale d'un sous-bloc ;
- un nombre de découpages maximal ;
- une différence entre les vecteurs de contrôle associés à deux sous-blocs inférieure à un seuil prédéterminé,

- et **en ce qu'**il comprend: des moyens d'obtention d'un partitionnement commun en sous-blocs pour ledit bloc donné, dits sous-blocs de base, par union desdites première et deuxième partitions,
- des moyens de détermination d'un premier jeu de vecteurs de contrôle pour lesdits sous-blocs de base, à partir des vecteurs de contrôle associés au bloc de l'image courante,
- des moyens de détermination d'un second jeu de vecteurs de contrôle pour lesdits sous-blocs de base, à partir des vecteurs de contrôle associés au bloc de l'image intermédiaire,
- des moyens de compensation en mouvement en avant d'un sous-bloc de base à l'aide dudit second jeu de vecteurs de contrôle, délivrant un sous-bloc de ladite image intermédiaire,

- des moyens de prédiction de ladite image courante par compensation en mouvement en avant dudit sous-bloc de ladite image intermédiaire vers un sous-bloc correspondant de ladite image courante à l'aide dudit premier jeu de vecteurs de contrôle.

**Patentansprüche**

1. Verfahren zur Codierung einer Sequenz von Bildern, welches eine Vorhersage wenigstens eines Blocks eines aktuellen Bildes (Ip) der Sequenz ausgehend von einem Block eines zuvor in Blöcke zerlegten Referenzbildes (Iref) implementiert, wobei diese Vorhersage wenigstens einen Block eines aktuellen Bildes (Ip) der Sequenz wenigstens einem entsprechenden Block in wenigstens einem Zwischenbild (Ia) zuordnet, das zeitlich zwischen dem Referenzbild und dem aktuellen Bild angeordnet ist, welches einer Vorwärtsbewegungskompensation unterzogen werden soll, wobei das oder die Zwischenbilder zuvor codiert wurden,
   die folgenden Schritte umfassend:

   - Bestimmung (121) einer ersten Vielzahl von Bewegungsvektoren, dem aktuellen Bild zugeordnete Steuerungsvektoren genannt, wobei diese Steuerungsvektoren jeweils für eine Verschiebung zwischen einem Eckpunkt des gegebenen Blocks des Referenzbildes und einer entsprechenden Position dieses Eckpunktes in dem aktuellen Bild repräsentativ sind,
   - Zerlegung (122), unter Berücksichtigung der Bewegung zwischen dem Referenzbild und dem aktuellen Bild, des gegebenen Blocks in Unterblöcke durch Ausführung wenigstens einer Zerlegungsiteration, bis, wenn bei der Zerlegung wenigstens zwei Iterationen ausgeführt werden, ein vorbestimmtes erstes Abbruchkriterium der Zerlegung erfüllt ist, das eine erste Aufteilung definiert,
   - Bestimmung (131) einer zweiten Vielzahl von Bewegungsvektoren, dem Zwischenbild zugeordnete Steuerungsvektoren genannt, die jeweils für eine Verschiebung zwischen einem Eckpunkt des gegebenen Blocks des Referenzbildes und einer entsprechenden Position dieses Eckpunktes in dem Zwischenbild repräsentativ sind,
   - Zerlegung (132), unter Berücksichtigung der Bewegung zwischen dem Referenzbild und dem Zwischenbild, des gegebenen Blocks in Unterblöcke durch Ausführung wenigstens einer Zerlegungsiteration, bis, wenn bei der Zerlegung wenigstens zwei Iterationen ausgeführt werden, ein vorbestimmtes zweites Abbruchkriterium der Zerlegung erfüllt ist, das eine zweite Aufteilung definiert,

   wobei das Verfahren **dadurch gekennzeichnet ist, dass** das erste und das zweite Abbruchkriterium der Zerlegung der Gruppe angehören, welche umfasst:

   - eine minimale Größe eines Unterblocks;
   - eine maximale Anzahl von Zerlegungen;
   - eine Differenz zwischen den zwei Unterblöcken zugeordneten Steuerungsvektoren, die kleiner als ein vorbestimmter Schwellenwert ist,

   und dadurch, dass es die Gewinnung einer gemeinsamen Aufteilung (141) in Unterblöcke für den gegebenen Block, Basisunterblöcke genannt, durch Vereinigung der ersten und der zweiten Aufteilung und eine Vorhersage des aktuellen Bildes ausgehend von dem Zwischenbild umfasst, wobei diese Vorhersage die folgenden Schritte umfasst:

   - Bestimmung (123) eines ersten Satzes von Steuerungsvektoren für die Basisunterblöcke aus den dem Block des aktuellen Bildes zugeordneten Steuerungsvektoren,
   - Bestimmung (133) eines zweiten Satzes von Steuerungsvektoren für die Basisunterblöcke aus den dem Block des Zwischenbildes zugeordneten Steuerungsvektoren,
   - Vorwärtsbewegungskompensation (134) eines Basisunterblocks mithilfe des zweiten Satzes von Steuerungsvektoren, welche einen Unterblock des Zwischenbildes liefert,
   - Vorhersage des aktuellen Bildes durch Vorwärtsbewegungskompensation (124) dieses Unterblocks des Zwischenbildes hin zu einem entsprechenden Unterblock des aktuellen Bildes mithilfe des ersten Satzes von Steuerungsvektoren.

2. Verfahren zur Codierung nach Anspruch 1, **dadurch gekennzeichnet, dass** wenigstens einer der Schritte der Zerlegung (122, 132) des gegebenen Blocks in Unterblöcke zwei aufeinander folgende Durchläufe der Zerlegung in Unterblöcke von adaptiver Größe implementiert.

**3.** Verfahren zur Codierung nach Anspruch 1, **dadurch gekennzeichnet, dass** es einen Schritt der Einfügung, in ein für die Sequenz repräsentatives Signal, wenigstens einer Identifikationsinformation, welche das Referenzbild und das oder die Zwischenbilder, die zum Codieren des aktuellen Bildes verwendet werden, signalisiert, und wenigstens eine Information zur Rekonstruktion der Steuerungsvektoren für den gegebenen Block umfasst.

**4.** Computerprogramm, welches Anweisungen zur Durchführung des Verfahrens zur Codierung nach Anspruch 1, wenn das Programm von einem Prozessor ausgeführt wird, umfasst.

**5.** Vorrichtung zur Codierung einer Sequenz von Bildern, welche Mittel zur Vorhersage wenigstens eines Blocks eines aktuellen Bildes (Ip) der Sequenz ausgehend von einem Block eines zuvor in Blöcke zerlegten Referenzbildes (Iref) umfasst, wobei die Mittel zur Vorhersage wenigstens einen Block eines aktuellen Bildes (Ip) der Sequenz wenigstens einem entsprechenden Block in wenigstens einem Zwischenbild (Ia) zuordnen, das zeitlich zwischen dem Referenzbild und dem aktuellen Bild angeordnet ist, welches einer Vorwärtsbewegungskompensation unterzogen werden soll,

wobei das oder die Zwischenbilder zuvor codiert wurden,
wobei die Vorrichtung zur Codierung umfasst:

- Mittel zur Bestimmung (121) einer ersten Vielzahl von Bewegungsvektoren, dem aktuellen Bild zugeordnete Steuerungsvektoren genannt, wobei diese Steuerungsvektoren jeweils für eine Verschiebung zwischen einem Eckpunkt des gegebenen Blocks des Referenzbildes und einer entsprechenden Position dieses Eckpunktes in dem aktuellen Bild repräsentativ sind,
- Mittel zur Zerlegung (122), unter Berücksichtigung der Bewegung zwischen dem Referenzbild und dem aktuellen Bild, des gegebenen Blocks in Unterblöcke durch Ausführung wenigstens einer Zerlegungsiteration, bis, wenn bei der Zerlegung wenigstens zwei Iterationen ausgeführt werden, ein vorbestimmtes erstes Abbruchkriterium der Zerlegung erfüllt ist, das eine erste Aufteilung definiert,
- Mittel zur Bestimmung (131) einer zweiten Vielzahl von Bewegungsvektoren, dem Zwischenbild zugeordnete Steuerungsvektoren genannt, die jeweils für eine Verschiebung zwischen einem Eckpunkt des gegebenen Blocks des Referenzbildes und einer entsprechenden Position dieses Eckpunktes in dem Zwischenbild repräsentativ sind,
- Mittel zur Zerlegung (132), unter Berücksichtigung der Bewegung zwischen dem Referenzbild und dem Zwischenbild, des gegebenen Blocks in Unterblöcke durch Ausführung wenigstens einer Zerlegungsiteration, bis, wenn bei der Zerlegung wenigstens zwei Iterationen ausgeführt werden, ein vorbestimmtes zweites Abbruchkriterium der Zerlegung erfüllt ist, das eine zweite Aufteilung definiert,

wobei die Vorrichtung zur Codierung **dadurch gekennzeichnet ist, dass** das erste und das zweite Abbruchkriterium der Zerlegung der Gruppe angehören, welche umfasst:

- eine minimale Größe eines Unterblocks;
- eine maximale Anzahl von Zerlegungen;
- eine Differenz zwischen den zwei Unterblöcken zugeordneten Steuerungsvektoren, die kleiner als ein vorbestimmter Schwellenwert ist,

und dadurch, dass sie außerdem Mittel zur Gewinnung der gemeinsamen Aufteilung (141) in Unterblöcke für den gegebenen Block, Basisunterblöcke genannt, durch Vereinigung der ersten und der zweiten Aufteilung und Mittel zur Vorhersage des aktuellen Bildes ausgehend von dem Zwischenbild umfasst, wobei die Mittel zur Vorhersage umfassen:

- Mittel zur Bestimmung (123) eines ersten Satzes von Steuerungsvektoren für die Basisunterblöcke aus den dem Block des aktuellen Bildes zugeordneten Steuerungsvektoren,
- Mittel zur Bestimmung (133) eines zweiten Satzes von Steuerungsvektoren für die Basisunterblöcke aus den dem Block des Zwischenbildes zugeordneten Steuerungsvektoren,
- Mittel zur Vorwärtsbewegungskompensation (134) eines Basisunterblocks mithilfe des zweiten Satzes von Steuerungsvektoren, welche einen Unterblock des Zwischenbildes liefert,
- Mittel zur Vorhersage des aktuellen Bildes durch Vorwärtsbewegungskompensation (124) dieses Unterblocks des Zwischenbildes hin zu einem entsprechenden Unterblock des aktuellen Bildes mithilfe des ersten Satzes von Steuerungsvektoren.

**6.** Signal, das für eine Sequenz von Bildern repräsentativ ist, die gemäß dem Verfahren zur Codierung von Anspruch 1 codiert ist,

**dadurch gekennzeichnet, dass** es wenigstens eine Identifikationsinformation, welche ein Referenzbild und wenigstens ein Zwischenbild, die zum Codieren eines aktuellen Bildes verwendet werden, signalisiert, und wenigstens eine Information zur Rekonstruktion von Steuerungsvektoren für einen gegebenen Block des Referenzbildes umfasst.

**7.** Verfahren zur Decodierung eines Signals, das für eine Sequenz von Bildern repräsentativ ist, nach Anspruch 6, welches die folgenden Schritte umfasst, für wenigstens ein aktuelles Bild:

- Bestimmung eines Referenzbildes und wenigstens eines Zwischenbildes, die verwendet werden, um das aktuelle Bild zu codieren, aus wenigstens einer Identifikationsinformation, die in dem Signal enthalten ist,
- Gewinnung von Informationen zur Rekonstruktion von Steuerungsvektoren für wenigstens einen gegebenen Block des Referenzbildes,
- Vorhersage des aktuellen Bildes, welche die folgenden Teilschritte umfasst, für den wenigstens einen gegebenen Block:
- Bestimmung, aus den Informationen zur Rekonstruktion, einer ersten Vielzahl von Bewegungsvektoren, dem aktuellen Bild zugeordnete Steuerungsvektoren genannt, wobei diese Steuerungsvektoren jeweils für eine Verschiebung zwischen einem Eckpunkt des gegebenen Blocks des Referenzbildes und einer entsprechenden Position dieses Eckpunktes in dem aktuellen Bild repräsentativ sind,
- Zerlegung, unter Berücksichtigung der Bewegung zwischen dem Referenzbild und dem aktuellen Bild, des gegebenen Blocks in Unterblöcke durch Ausführung wenigstens einer Zerlegungsiteration, bis, wenn bei der Zerlegung wenigstens zwei Iterationen ausgeführt werden, ein vorbestimmtes erstes Abbruchkriterium der Zerlegung erfüllt ist, das eine erste Aufteilung definiert,
- Bestimmung, aus den Informationen zur Rekonstruktion, einer zweiten Vielzahl von Bewegungsvektoren, dem Zwischenbild zugeordnete Steuerungsvektoren genannt, die jeweils für eine Verschiebung zwischen einem Eckpunkt des gegebenen Blocks des Referenzbildes und einer entsprechenden Position dieses Eckpunktes in dem Zwischenbild repräsentativ sind,
- Zerlegung, unter Berücksichtigung der Bewegung zwischen dem Referenzbild und dem Zwischenbild, des gegebenen Blocks in Unterblöcke durch Ausführung wenigstens einer Zerlegungsiteration, bis, wenn bei der Zerlegung wenigstens zwei Iterationen ausgeführt werden, ein vorbestimmtes zweites Abbruchkriterium der Zerlegung erfüllt ist, das eine zweite Aufteilung definiert,

wobei das Verfahren zur Decodierung **dadurch gekennzeichnet ist, dass** das erste und das zweite Abbruchkriterium der Zerlegung der Gruppe angehören, welche umfasst:

- eine minimale Größe eines Unterblocks;
- eine maximale Anzahl von Zerlegungen;
- eine Differenz zwischen den zwei Unterblöcken zugeordneten Steuerungsvektoren, die kleiner als ein vorbestimmter Schwellenwert ist,

und dadurch, dass es die folgenden Schritte umfasst:

- Gewinnung einer gemeinsamen Aufteilung in Unterblöcke für den gegebenen Block, Basisunterblöcke genannt, durch Vereinigung der ersten und der zweiten Aufteilung,
- Bestimmung eines ersten Satzes von Steuerungsvektoren für die Basisunterblöcke aus den dem Block des aktuellen Bildes zugeordneten Steuerungsvektoren,
- Bestimmung eines zweiten Satzes von Steuerungsvektoren für die Basisunterblöcke aus den dem Block des Zwischenbildes zugeordneten Steuerungsvektoren,
- Vorwärtsbewegungskompensation eines Basisunterblocks mithilfe des zweiten Satzes von Steuerungsvektoren, welche einen Unterblock des Zwischenbildes liefert,
- Vorhersage des aktuellen Bildes durch Vorwärtsbewegungskompensation dieses Unterblocks des Zwischenbildes hin zu einem entsprechenden Unterblock des aktuellen Bildes mithilfe des ersten Satzes von Steuerungsvektoren.

**8.** Computerprogramm, welches Anweisungen zur Durchführung des Verfahrens zur Decodierung nach Anspruch 7, wenn das Programm von einem Prozessor ausgeführt wird, umfasst.

**9.** Vorrichtung zur Decodierung eines Signals, das für eine Sequenz von Bildern repräsentativ ist, nach Anspruch 6,

welche die folgenden Mittel umfasst, die für wenigstens ein aktuelles Bild aktiviert werden:

- Mittel zur Bestimmung eines Referenzbildes und wenigstens eines Zwischenbildes, die verwendet werden, um das aktuelle Bild zu codieren, aus wenigstens einer Identifikationsinformation, die in dem Signal enthalten ist,
- Mittel zur Gewinnung von Informationen zur Rekonstruktion von Steuerungsvektoren für wenigstens einen gegebenen Block des Referenzbildes,
- Mittel zur Vorhersage des aktuellen Bildes, welche die folgenden Mittel umfassen, die für den wenigstens einen gegebenen Block aktiviert werden:

- Mittel zur Bestimmung, aus den Informationen zur Rekonstruktion, einer ersten Vielzahl von Bewegungsvektoren, dem aktuellen Bild zugeordnete Steuerungsvektoren genannt, wobei diese Steuerungsvektoren jeweils für eine Verschiebung zwischen einem Eckpunkt des gegebenen Blocks des Referenzbildes und einer entsprechenden Position dieses Eckpunktes in dem aktuellen Bild repräsentativ sind,
- Mittel zur Zerlegung, unter Berücksichtigung der Bewegung zwischen dem Referenzbild und dem aktuellen Bild, des gegebenen Blocks in Unterblöcke durch Ausführung wenigstens einer Zerlegungsiteration, bis, wenn bei der Zerlegung wenigstens zwei Iterationen ausgeführt werden, ein vorbestimmtes erstes Abbruchkriterium der Zerlegung erfüllt ist, das eine erste Aufteilung definiert,
- Mittel zur Bestimmung, aus den Informationen zur Rekonstruktion, einer zweiten Vielzahl von Bewegungsvektoren, dem Zwischenbild zugeordnete Steuerungsvektoren genannt, die jeweils für eine Verschiebung zwischen einem Eckpunkt des gegebenen Blocks des Referenzbildes und einer entsprechenden Position dieses Eckpunktes in dem Zwischenbild repräsentativ sind,
- Mittel zur Zerlegung, unter Berücksichtigung der Bewegung zwischen dem Referenzbild und dem Zwischenbild, des gegebenen Blocks in Unterblöcke durch Ausführung wenigstens einer Zerlegungsiteration, bis, wenn bei der Zerlegung wenigstens zwei Iterationen ausgeführt werden, ein vorbestimmtes zweites Abbruchkriterium der Zerlegung erfüllt ist, das eine zweite Aufteilung definiert,

wobei die Vorrichtung zur Decodierung **dadurch gekennzeichnet ist, dass** das erste und das zweite Abbruchkriterium der Zerlegung der Gruppe angehören, welche umfasst:

- eine minimale Größe eines Unterblocks;
- eine maximale Anzahl von Zerlegungen;
- eine Differenz zwischen den zwei Unterblöcken zugeordneten Steuerungsvektoren, die kleiner als ein vorbestimmter Schwellenwert ist,

und dadurch, dass sie umfasst:

- Mittel zur Gewinnung einer gemeinsamen Aufteilung in Unterblöcke für den gegebenen Block, Basisunterblöcke genannt, durch Vereinigung der ersten und der zweiten Aufteilung,
- Mittel zur Bestimmung eines ersten Satzes von Steuerungsvektoren für die Basisunterblöcke aus den dem Block des aktuellen Bildes zugeordneten Steuerungsvektoren,
- Mittel zur Bestimmung eines zweiten Satzes von Steuerungsvektoren für die Basisunterblöcke aus den dem Block des Zwischenbildes zugeordneten Steuerungsvektoren,
- Mittel zur Vorwärtsbewegungskompensation eines Basisunterblocks mithilfe des zweiten Satzes von modifizierten Steuerungsvektoren, welche einen Unterblock des Zwischenbildes liefert,
- Mittel zur Vorhersage des aktuellen Bildes durch Vorwärtsbewegungskompensation dieses Unterblocks des Zwischenbildes hin zu einem entsprechenden Unterblock des aktuellen Bildes mithilfe des ersten Satzes von Steuerungsvektoren.

**Claims**

1. Method for coding a sequence of images implementing a prediction of at least one block of a current image (Ip) of said sequence on the basis of a block of a reference image (Iref) previously sliced into blocks, said prediction associating at least one block of a current image (Ip) of said sequence with at least one corresponding block in at least one intermediate image (Ia) temporally located between said reference image and said current image, to be forward motion compensated,
said intermediate image or images having been previously coded,
comprising the following steps:

- determination (121) of a first plurality of motion vectors, termed control vectors, associated with the current image, said control vectors each being representative of a displacement between a vertex of said given block of the reference image and a corresponding position of said vertex in the current image,
- slicing (122), taking account of the motion between the reference image and the current image, of said given block into sub-blocks implementing at least one slicing iteration, until the attaining, when said slicing implements at least two iterations, of a first predetermined slicing stopping criterion, defining a first partition,
- determination (131) of a second plurality of motion vectors, termed control vectors, associated with the intermediate image, and each representative of a displacement between a vertex of said given block of the reference image and a corresponding position of said vertex in the intermediate image,
- slicing (132), taking account of the motion between the reference image and the intermediate image, said given block into sub-blocks implementing at least one slicing iteration, until the attaining, when said slicing implements at least two iterations, of a second predetermined slicing stopping criterion, defining a second partition,

the method is **characterized in that** said first and second slicing stopping criteria belong to the group comprising:

- a minimum size of a sub-block;
- a maximum number of slicings;
- a difference of less than a predetermined threshold between the control vectors associated with two sub-blocks,

and **in that** it comprises the obtaining of a common partitioning (141) into sub-blocks for said given block, termed base sub-blocks, by union of said first and second partitions, and a prediction of said current image on the basis of said intermediate image, said prediction comprising the following steps:

- determination (123) of a first set of control vectors for said base sub-blocks, on the basis of the control vectors associated with the block of the current image;
- determination (133) of a second set of control vectors for said base sub-blocks, on the basis of the control vectors associated with the block of the intermediate image,
- forward motion compensation (134) of a base sub-block with the aid of said second set of control vectors delivering a sub-block of said intermediate image,
- prediction of said current image by forward motion compensation (124) of said sub-block of said intermediate image towards a corresponding sub-block of said current image with the aid of said first set of control vectors.

2. Coding method according to Claim 1, **characterized in that** at least one of said steps of slicing (122, 132) into sub-blocks of said given block implements two successive passes of slicing into sub-blocks of adaptive size.

3. Coding method according to Claim 1, **characterized in that** it comprises a step of inserting, into a signal representative of said sequence, at least one identification information item signalling said reference image and said intermediate image or images used to code said current image, and at least one information item in respect of reconstruction of said control vectors for said given block.

4. Computer program comprising instructions for the implementation of the coding method according to Claim 1 when said program is executed by a processor.

5. Device for coding a sequence of images, comprising means for predicting at least one block of a current image (Ip) of said sequence on the basis of a block of a reference image (Iref) previously sliced into blocks, said prediction means associating at least one block of a current image (Ip) of said sequence with at least one corresponding block in at least one intermediate image (Ia) temporally located between said reference image and said current image, to be forward motion compensated, said intermediate image or images having been previously coded, the coding device comprising:

- means (121) for determining a first plurality of motion vectors, termed control vectors, associated with the current image, said control vectors each being representative of a displacement between a vertex of said given block of the reference image and a corresponding position of said vertex in the current image,
- means (122) for slicing, taking account of the motion between the reference image and the current image, said given block into sub-blocks implementing at least one slicing iteration, until the attaining, when said slicing implements at least two iterations, of a first predetermined slicing stopping criterion, defining a first partition,
- means (131) for determining a second plurality of motion vectors, termed control vectors, associated with the intermediate image, and each representative of a displacement between a vertex of said given block of the reference image and a corresponding position of said vertex in the intermediate image,
- means (132) for slicing, taking account of the motion between the reference image and the intermediate image, said given block into sub-blocks implementing at least one slicing iteration, until the attaining, when said slicing implements at least two iterations, of a second predetermined slicing stopping criterion, defining a second partition,

the coding device is **characterized in that** said first and second slicing stopping criteria belong to the group comprising:

- a minimum size of a sub-block;

∘ a maximum number of slicings;
∘ a difference of less than a predetermined threshold between the control vectors associated with two sub-blocks,

and **in that** it further comprises means for obtaining said common partitioning (141) into sub-blocks for said given block, termed base sub-blocks, by union of said first and second partitions, and means for predicting said current image on the basis of said intermediate image, said prediction means comprising:

- means (123) for determining a first set of control vectors for said base sub-blocks, on the basis of the control vectors associated with the block of the current image;
- means (133) for determining a second set of control vectors for said base sub-blocks, on the basis of the control vectors associated with the block of the intermediate image,
- means (134) for forward motion compensation of a base sub-block with the aid of said second set of control vectors, delivering a sub-block of said intermediate image,
- means for predicting said current image by forward motion compensation (124) of said sub-block of said intermediate image towards a corresponding sub-block of said current image with the aid of said first set of control vectors.

6. Signal representative of an image sequence coded according to the method for coding of Claim 1, **characterized in that** it comprises at least one identification information item signalling a reference image and at least one intermediate image which are used to code a current image, and at least one information item in respect of reconstruction of control vectors for a given block of said reference image.

7. Method for decoding a signal representative of an image sequence according to Claim 6, comprising the following steps, for at least one current image:

- determination of a reference image and of at least one intermediate image which are used to code said current image, on the basis of at least one identification information item present in said signal,
- obtaining of reconstruction information items in respect of control vectors for at least one given block of said reference image,
- prediction of said current image comprising the following sub-steps, for said at least one given block:
- determination, on the basis of said reconstruction information items, of a first plurality of motion vectors, termed control vectors, associated with the current image, said control vectors each being representative of a displacement between a vertex of said given block of the reference image and a corresponding position of said vertex in the current image,
- slicing, taking account of the motion between the reference image and the current image, of said given block into sub-blocks implementing at least one slicing iteration, until the attaining, when said slicing implements at least two iterations, of a first predetermined slicing stopping criterion, defining a first partition,
- determination, on the basis of said reconstruction information items, of a second plurality of motion vectors, termed control vectors, associated with the intermediate image, and each representative of a displacement between a vertex of said given block of the reference image and a corresponding position of said vertex in the intermediate image,
- slicing, taking account of the motion between the reference image and the intermediate image, said given block into sub-blocks implementing at least one slicing iteration, until the attaining, when said slicing implements at least two iterations, of a second predetermined slicing stopping criterion, defining a second partition,

the decoding method is **characterized in that** said first and second slicing stopping criteria belong to the group comprising:

- a minimum size of a sub-block;
- a maximum number of slicings;
∘ a difference of less than a predetermined threshold between the control vectors associated with two sub-blocks,

and **in that** it comprises the following steps:

- obtaining of a common partitioning into sub-blocks for said given block, termed base sub-blocks, by union of said first and second partitions;
- determination of a first set of control vectors for said base sub-blocks, on the basis of the control vectors associated with the current image;
- determination of a second set of control vectors for said base sub-blocks, on the basis of the control vectors associated with the intermediate image;
- forward motion compensation of a base sub-block with the aid of said second set of control vectors delivering a sub-block of said intermediate image,
- prediction of said current image by forward motion compensation of said sub-block of said intermediate image towards a corresponding sub-block of said current image with the aid of said first set of control vectors.

8. Computer program comprising instructions for the implementation of the decoding method according to Claim 7 when said program is executed by a processor.

9. Device for decoding a signal representative of an image sequence according to Claim 6, comprising the following means, activated for at least one current image:

- means for determining a reference image and at least one intermediate image which are used to code said current image, on the basis of at least one identification information item present in said signal,
- means for obtaining reconstruction information items in respect of control vectors for at least one given block of said reference image,
- means for predicting said current image comprising the following means, activated for said at least one given block:
- means for determining, on the basis of said reconstruction information items, a first plurality of motion vectors, termed control vectors, associated with the current image, said control vectors each being representative of a displacement between a vertex of said given block of the reference image and a corresponding position of said vertex in the current image,
- means for slicing, taking account of the motion between the reference image and the current image, said given block into sub-blocks implementing at least one slicing iteration, until the attaining, when said slicing implements at least two iterations, of a first predetermined slicing stopping criterion, defining a first partition,
- means for determining, on the basis of said reconstruction information items, a second plurality of motion vectors, termed control vectors, associated with the intermediate image, and each representative of a displacement between a vertex of said given block of the reference image and a corresponding position of said vertex in the intermediate image,
- means for slicing, taking account of the motion between the reference image and the intermediate image, said given block into sub-blocks implementing at least one slicing iteration, until the attaining, when said slicing implements at least two iterations, of a second predetermined slicing stopping criterion, defining a second partition,

the decoding device is **characterized in that** said first and second slicing stopping criteria belong to the group comprising:

- a minimum size of a sub-block;
- a maximum number of slicings;
- a difference of less than a predetermined threshold between the control vectors associated with two sub-blocks,
- and **in that** it comprises: means for obtaining a common partitioning into sub-blocks for said given block, termed base sub-blocks, by union of said first and second partitions;
- means for determining a first set of control vectors for said base sub-blocks, on the basis of the control vectors associated with the block of the current image;

- means for determining a second set of control vectors for said base sub-blocks, on the basis of the control vectors associated with the block of the intermediate image;
- means for forward motion compensation of a base sub-block with the aid of said second set of control vectors, delivering a sub-block of said intermediate image,
- means for predicting said current image by forward motion compensation of said sub-block of said intermediate image towards a corresponding sub-block of said current image with the aid of said first set of control vectors.

$I_R$

$I_C$

Fig. 1A

$I_R$

R

$I_C$

D

Fig. 1B

Fig. 2

31

325    326    321

328

327    322    323    324

335  336    331

338 337 332    333 334

Fig. 3A

32    34

33    35

Fig. 3B

Fig. 4A

Fig. 4B

Fig. 4C

Fig. 5

62

Iref,Ia,Ip →

μP

→

61 — M

Pg — 63

## Fig. 6

72

→

μP

→

71 — M

Pg — 73

## Fig. 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2917872

- FR 0854465